# EUROPEAN PATENT APPLICATION

(11) **EP 2 395 762 A2**
(43) Date of publication of application: **14.12.2011**
(21) Application number: 11004673.7
(22) Date of filing: 08.06.2011
(51) Int. Cl.: H04N 13/00, H04N 1/00

(54) **Mobile terminal and controlling method thereof**

(30) Priority: 10.06.2010 KR 20100054871; 14.06.2010 KR 20100055846
(71) Applicant: LG Electronics Inc., Seoul 150-721 (KR)
(72) Inventor: Lim, Gukchan, Kumchon-gu Seoul 153-801 (KR); Kim, Seongdo, Kumchon-gu Seoul 153-801 (KR); Jin, Dongchul, Kumchon-gu Seoul 153-801 (KR); Ryu, Sangjo, Kumchon-gu Seoul 153-801 (KR); Park, Sangmo, Kumchon-gu Seoul 153-801 (KR)
(74) Representative: Frenkel, Matthias Alexander

(57) **Abstract**

A mobile terminal and controlling method thereof are disclosed, by which a focal position of a 3D image is controlled in accordance with a viewer's position and by which guide information on the focal position is provided to the viewer. The present invention includes a display unit configured to display a 3D image, a sensing unit configured to detect a position information of a viewer, the sensing unit comprising at least one selected from the group consisting of at least one proximity sensor, at least one distance sensor and at least one camera, and a controller receiving the position information of the user from the sensing unit, the controller controlling the mobile terminal to facilitate the viewer to find a focal position of the 3D image based on the position information of the user, or the controller controlling the mobile terminal to vary the focal position of the 3D image in accordance with a position of the viewer.

## Description

### BACKGROUND OF THE INVENTION

### Field of the Invention

The present invention relates to a mobile terminal, and more particularly, to a mobile terminal and controlling method thereof. Although the present invention is suitable for a wide scope of applications, it is particularly suitable for controlling a focal position of a 3D image in accordance with a viewer's position and providing guide information on the focal position to the viewer.

### Discussion of the Related Art

Generally, terminals can be classified into mobile terminals and stationary terminals according to a presence or non-presence of mobility. And, the mobile terminals can be further classified into handheld terminals and vehicle mount terminals according to availability for hand-carry.

As functions of the terminal tend to be diversified, the terminal is implemented as a multimedia player type equipped with composite functions including picture or video photographing, music or video file playback, games, broadcast reception and the like for example.

To support and increase of the terminal functions, it may be able to consider the improvement of structural parts and/or software parts of the terminal.

As a 3D (or stereoscopic) image viewable display has been applied to a video device, there are many ongoing efforts to apply the 3D image display to a mobile terminal.

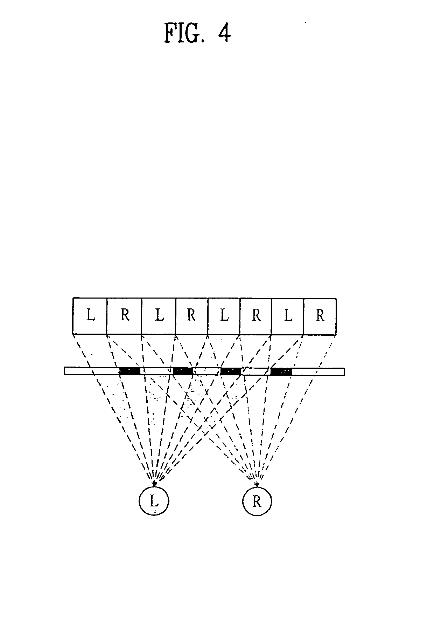

However, in a 3D image display device using a parallax barrier slit according to a related art, as shown in FIG. 4, since a position of the barrier slit is fixed, a viewing position (hereinafter named a focal position of a 3D image) for providing a user with clear stereoscopy is fixed as well. Therefore, in case of a parallax barrier according to a related art, if a viewer gets out of the fixed viewing position, it causes such a problem (e.g., ghost, afterimage, overlapping, etc.) that a 3D image is seen unclear or looks dizzy. And, it is inconvenient for a viewer to look for an intangible viewing position (or focal position of 3D image) by moving a position of its own for a display in the course of viewing the 3D image.

Moreover, 3D image displays are classified into glasses type and non-glasses type. In case of the non-glasses type, since a viewing position (hereinafter named a focal position of 3D image) for enabling a viewer to sense clear spectroscopy is fixed, when the viewer watches the 3D image by getting out of the focal position of the 3D image, it causes a problem (e.g., ghost, afterimage, overlapping, etc.) that the corresponding 3D image looks unclear or dizzy. Moreover, in case that the viewer gets out of the focal position, it causes a problem that the viewer should find the focal position of the 3D image by himself while keeping watching the unclear or dizzy 3D image. Besides, since the focal position of the 3D image is an intangible reference point, the viewer has difficulty in looking for the focal position of the 3D image.

### SUMMARY OF THE INVENTION

Accordingly, the present invention is directed to a mobile terminal and controlling method thereof that substantially obviate one or more problems due to limitations and disadvantages of the related art.

An object of the present invention is to provide a mobile terminal and controlling method thereof, by which a display unit having a variable focal position of a 3D image can be provided to the mobile terminal to control a focal position of a 3D image in accordance with a viewer's position.

Another object of the present invention is to provide a mobile terminal and controlling method thereof, by which a viewer is facilitated to watch a 3D image by avoiding the inconvenience to find a focal position of the 3D image in the course of watching the 3D image.

Another object of the present invention is to provide a mobile terminal and controlling method thereof, by which a time taken to control a focal position of a 3D image can be shortened.

Another object of the present invention is to provide a mobile terminal and controlling method thereof, by which information on a process for controlling a focal position of a 3D image in accordance with a viewer's position can be conveniently delivered to the viewer and by which the viewer is facilitated to manipulate the process for controlling the focal position of the 3D image.

A further object of the present invention is to provide a mobile terminal and controlling method thereof, by which a viewer is facilitated to find a focal position of a 3D image.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a mobile terminal according to the present invention includes a display unit configured to display a 3D image, a sensing unit configured to detect a position information of a viewer, the sensing unit comprising at least one selected from the group consisting of at least one proximity sensor, at least one distance sensor and at least one camera, and a controller receiving the position information of the user from the sensing unit, the controller controlling the mobile terminal to facilitate the viewer to find a focal position of the 3D image based on the position information of the user, the controller controlling the mobile terminal to vary the focal position of the 3D image in accordance with a position of the viewer.

In another aspect of the present invention, a method of controlling a mobile terminal includes a position information detecting step of detecting a position information of a viewer using a sensing unit of the mobile terminal, a control variable searching step of searching a memory of the mobile terminal for at least one control variable selected from the group consisting of a length decision value, a space decision value and a displacement decision value of a light cutoff part of a barrier layer including a plurality of light cutoff parts and a space between a plurality of the light cutoff parts, and a barrier layer controlling step of controlling the barrier layer in accordance with the control variable found in the control variable searching step.

In another aspect of the present invention, a method of controlling a focal position of a 3D image in accordance with a position of a viewer in a mobile terminal includes a distance measuring step of measuring a distance between a display unit and the viewer, a first control variable searching step of searching a memory of the mobile terminal for a length decision value and a space decision value of a barrier layer corresponding to the distance measured in the distance measuring step, a first barrier layer controlling step of controlling ON/OFF of a subpixel of the barrier layer in accordance with the length decision value and the space decision value found in the first control variable searching step, and a deflection presence determining step of determining whether a binocular center of the viewer is deflected from a center of the display unit. Preferably, the method further includes a deflection degree measuring step of if it is determined that the binocular center of the viewer is deflected from the center of the display unit, measuring a deflection degree of the binocular center of the viewer from the center of the display unit, a second control variable searching step of searching the memory of the mobile terminal for a displacement decision value of the light cutoff part corresponding to the deflection degree measured in the deflection degree measuring step, and a second barrier layer controlling step of controlling the ON/OFF of the subpixel of the barrier layer in accordance with the displacement decision value found in the second control variable searching step.

In a further aspect of the present invention, a method of controlling a mobile terminal includes a position information detecting step of detecting a position information of a viewer using a sensing unit of the mobile terminal, a determining step f determining whether the viewer is located at a focal position of a 3D image, and a guide information providing step of providing a guide information on the focal position of the 3D image.

Accordingly, the present invention provides the following effects and/or advantages.

First of all, the present invention controls a focal position of a 3D image in accordance with a viewer's position, thereby providing a variable focal position of the 3D image to a mobile terminal. Therefore, the present invention enables a viewer to avoid the difficulty in looking for a focal position of a 3D image and is also able to shorten a time taken to control the focal position of the 3D image, thereby providing the viewer with convenience and comfort in viewing the 3D image.

Secondly, the present invention facilitates a viewer to be provided with information on a process for controlling a focal position of a 3D image in accordance with a viewer's position, thereby facilitating the viewer to manipulate the process for controlling the focal position of the 3D image.

Thirdly, when a viewer watches a 3D image on a mobile terminal, the present invention facilitates the viewer to find a focal position of the 3D image. Therefore, the present invention provides the viewer with a clear 3D image as well as convenience when the viewer watches the 3D image on the mobile terminal.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a block diagram of a mobile terminal in accordance with an embodiment of the present invention;

FIG. 2A is a front perspective diagram of a mobile terminal according to one embodiment of the present invention;

FIG. 2B is a rear perspective diagram of a mobile terminal according to one embodiment of the present invention;

FIG. 3 is a conceptional diagram of a proximity sensor;

FIG. 4 is a schematic diagram of a display unit for a 3D image according to a related art, in which a focal position of the 3D image is fixed;

FIG. 5 is a schematic perspective diagram of a display unit including a barrier layer according to one embodiment of the present invention;

FIG. 6 is an exemplary table of data including a length decision value and a space decision value, each of which corresponds to a distance between a viewer and a display unit;

FIG. 7 is an exemplary schematic diagram of a display unit if a distance between a viewer and a display unit is set to 25 cm;

FIG. 8 is an exemplary schematic diagram of a display unit if a distance between a viewer and a display unit is set to 45 cm;

FIG. 9 is an exemplary table of data indicating a displacement decision value corresponding to a deflection angle;

FIG. 10 is an exemplary schematic diagram of a display unit if a distance between a viewer and a display unit and a deflection angle are set to 25 cm and +10 degrees, respectively;

FIG. 11 is a flowchart of a process for selecting an operational mode according to the present invention;

FIG. 12 is a flowchart of a first example of a method of controlling a mobile terminal according to one embodiment of the present invention;

FIG. 13 is a flowchart of a second example of a method of controlling a mobile terminal according to one embodiment of the present invention;

FIG. 14 is a flowchart of a modified example of a method of controlling a mobile terminal according to a second embodiment of the present invention;

FIG. 15 is an exemplary diagram of a display configuration for whether to activate a control function of a focal position of a 3D image;

FIG. 16 is an exemplary diagram of a display configuration for an option of an operational mode of focal position control of a 3D image;

FIG. 17 and FIG. 18 are exemplary display configurations of a first mode and a second mode, respectively;

FIG. 19 is an exemplary display configuration for indicating that a viewer has deviated from a focal position of a 3D image;

FIG. 20 is an exemplary display configuration for indicating an option of a focal position control mode of a 3D image as well as indicating that a viewer has deviated from a focal position of the 3D image;

FIG. 21 is a schematic diagram of a mobile terminal according to another embodiment of the present invention, in which a region corresponding to a focal position of a 3D image is displayed on a display unit;

FIGs. 22A to 22G are schematic diagrams of a guide information providing unit according to a first embodiment of the present invention;

FIGs. 23A to 23C are schematic diagrams of a guide information providing unit according to a second embodiment of the present invention;

FIGs. 24A to 24C are schematic diagrams of a guide information providing unit according to a third embodiment of the present invention;

FIG. 25 is a schematic diagram for an operation of a vibrating unit according to the present invention when a viewer is situated at a focal position of a 3D image;

FIGs. 26A to 26C are schematic diagrams of a mobile terminal according to the present invention when a viewer deviates from a focal position of a 3D image in the course of viewing the 3D image;

FIG. 27 is a flowchart of a first example of a method of controlling a mobile terminal according to another embodiment of the present invention; and

FIG. 28 is a flowchart of a second example of a method of controlling a mobile terminal according to another embodiment of the present invention.

### DETAILED DESCRIPTION OF THE INVENTION

In the following detailed description, reference is made to the accompanying drawing figures which form a part hereof, and which show by way of illustration specific embodiments of the invention. It is to be understood by those of ordinary skill in this technological field that other embodiments may be utilized, and structural, electrical, as well as procedural changes may be made without departing from the scope of the present invention. Wherever possible, the same reference numbers will be used throughout the drawings to refer to the same or similar parts.

As used herein, the suffixes 'module', 'unit' and 'part' are used for elements in order to facilitate the disclosure only. Therefore, significant meanings or roles are not given to the suffixes themselves and it is understood that the 'module', 'unit' and 'part' can be used together or interchangeably.

A mobile terminal mentioned in this specification can include one of a mobile phone, a smart phone, a notebook computer (laptop computer), a digital broadcast terminal, a PDA (personal digital assistants), a PMP (portable multimedia player), a navigation system and the like. And, it is apparent to those skilled in the art that the configuration according to an embodiment disclosed in this specification should be applicable to such a fixed or stationary terminal as a digital TV, a desktop computer and the like except a case applicable to a mobile terminal only.

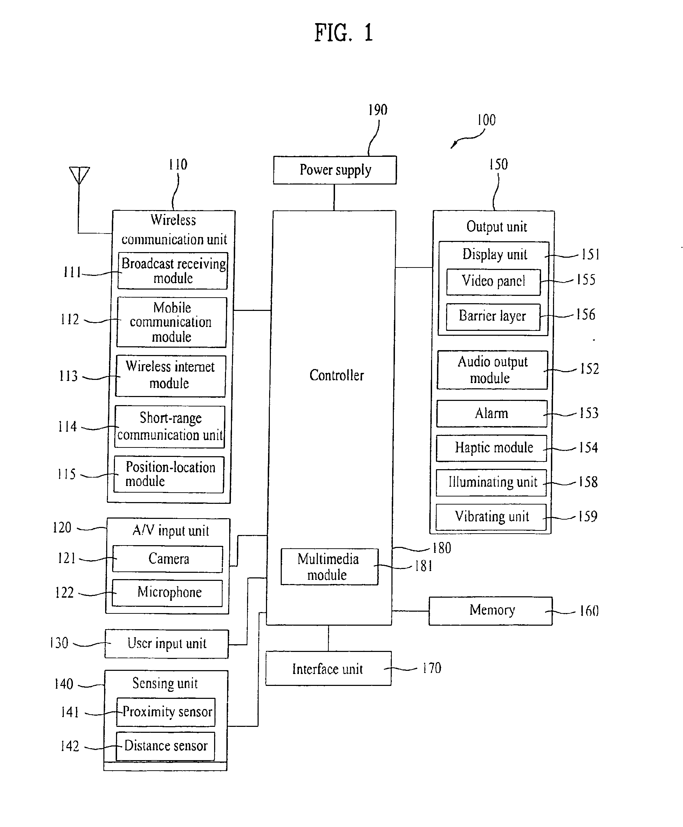

FIG. 1 is a block diagram of a mobile terminal 100 in accordance with an embodiment of the present invention.

FIG. 1 shows the mobile terminal 100 according to one embodiment of the present invention includes a wireless communication unit 110, an A/V (audio/video) input unit 120, a user input unit 130, a sensing unit 140, an output unit 150, a memory 160, an interface unit 170, a controller 180, a power supply unit 190 and the like. FIG. 1 shows the mobile terminal 100 having various components, but it is understood that implementing all of the illustrated components is not a requirement. Greater or fewer components may alternatively be implemented.

In the following description, the above components are explained in turn.

The wireless communication unit 110 typically includes one or more components which permits wireless communication between the mobile terminal 100 and a wireless communication system or network within which the mobile terminal 100 is located. For instance, the wireless communication unit 110 can include a broadcast receiving module 111, a mobile communication module 112, a wireless internet module 113, a short-range communication module 114, a position-location module 115 and the like.

The broadcast receiving module 111 receives a broadcast signal and/or broadcast associated information from an external broadcast managing server via a broadcast channel.

The broadcast channel may include a satellite channel and a terrestrial channel.

The broadcast managing server generally refers to a server which generates and transmits a broadcast signal and/or broadcast associated information or a server which is provided with a previously generated broadcast signal and/or broadcast associated information and then transmits the provided signal or information to a terminal.

The broadcast signal may be implemented as a TV broadcast signal, a radio broadcast signal, and a data broadcast signal, among others. If desired, the broadcast signal may further include a broadcast signal combined with a TV or radio broadcast signal.

The broadcast associated information includes information associated with a broadcast channel, a broadcast program, a broadcast service provider, etc. And, the broadcast associated information can be provided via a mobile communication network. In this case, the broadcast associated information can be received by the mobile communication module 112.

The broadcast associated information can be implemented in various forms. For instance, broadcast associated information may include an electronic program guide (EPG) of digital multimedia broadcasting (DMB) and electronic service guide (ESG) of digital video broadcast-handheld (DVB-H).

The broadcast receiving module 111 may be configured to receive broadcast signals transmitted from various types of broadcast systems. By nonlimiting example, such broadcasting systems include digital multimedia broadcasting-terrestrial (DMB-T), digital multimedia broadcasting-satellite (DMB-S), digital video broadcast-handheld (DVB-H), DVB-CBMS, OMA-BCAST, the data broadcasting system known as media forward link only (MediaFLO®) and integrated services digital broadcast-terrestrial (ISDB-T). Optionally, the broadcast receiving module 111 can be configured suitable for other broadcasting systems as well as the above-explained digital broadcasting systems.

The broadcast signal and/or broadcast associated information received by the broadcast receiving module 111 may be stored in a suitable device, such as a memory 160.

The mobile communication module 112 transmits/receives wireless signals to/from one or more network entities (e.g., base station, external terminal, server, etc.). Such wireless signals may represent audio, video, and data according to text/multimedia message transceivings, among others.

The wireless internet module 113 supports Internet access for the mobile terminal 100. This module may be internally or externally coupled to the mobile terminal 100. In this case, the wireless Internet technology can include WLAN (Wireless LAN) (Wi-Fi), Wibro (Wireless broadband), Wimax (World Interoperability for Microwave Access), HSDPA (High Speed Downlink Packet Access), etc.

The short-range communication module 114 facilitates relatively short-range communications. Suitable technologies for implementing this module include radio frequency identification (RFID), infrared data association (IrDA), ultra-wideband (UWB), as well at the networking technologies commonly referred to as Bluetooth and ZigBee, to name a few.

The position-location module 115 identifies or otherwise obtains the location of the mobile terminal 100. If desired, this module may be implemented with a global positioning system (GPS) module.

Meanwhile, the A/V (audio/video) input unit 120 is configured to input an audio signal or a video signal and can include a camera module 121, a microphone module 122 and the like. The camera module 121 processes an image frame of a still or moving picture obtained by an image sensor in a video call mode or a photographing mode. And, the processed image frame can be displayed on the display 151.

The image frame processed by the camera module 121 is stored in the memory 160 or can be externally transmitted via the wireless communication unit 110. At least two camera modules 121 can be provided according to a configuration type of the terminal.

The microphone 122 receives an external audio signal while the portable device is in a particular mode, such as phone call mode, recording mode and voice recognition. This audio signal is processed and converted into electric audio data. The processed audio data is transformed into a format transmittable to a mobile communication base station via the mobile communication module 112 in case of a call mode. The microphone 122 typically includes assorted noise removing algorithms to remove noise generated in the course of receiving the external audio signal.

The user input unit 130 generates input data responsive to user manipulation of an associated input device or devices. Examples of such devices include a keypad, a dome switch, a touchpad such as static pressure/capacitance, a jog wheel and a jog switch. A specific example is one in which the user input unit 130 is configured as a touchpad in cooperation with a display, which will be described in more detail below.

The sensing unit 140 detects such a current configuration of the mobile terminal 100 as an open/closed configuration of the mobile terminal 100, a location of the mobile terminal 100, a presence or non-presence of user contact, and the like and then generates a sensing signal for controlling an operation of the mobile terminal 100.

For instance, if the mobile terminal 100 is a slide phone type, the sensing unit 140 is able to sense whether a slide phone is open or closed. And, the sensing unit 140 is responsible for sensing functions related to a presence or non-presence of power supply of the power supply 190, an external device loading of the interface unit 170 and the like.

Meanwhile, the sensing unit 140 may include a proximity sensor 141.

The output unit 150 is configured to output an audio signal, a video signal and/or an alarm signal. And, the output unit 150 may include the display 151, an audio output module 152, an alarm output module 153, a haptic module 154, an illuminating unit 158, a vibrating unit 159 and the like.

The display 151 is typically implemented to visually display (output) information associated with the mobile terminal 100. For instance, if the mobile terminal is operating in a phone call mode, the display will generally provide a user interface (UI) or graphical user interface (GUI) which includes information associated with placing, conducting, and terminating a phone call.

The display 151 may be implemented using known display technologies including, for example, a liquid crystal display (LCD), a thin film transistor-liquid crystal display (TFT-LCD), an organic light-emitting diode display (OLED), a flexible display and a three-dimensional display. The mobile terminal 100 may include one or more of such displays.

Some of the displays can have a transparent or light-transmitting configuration to be externally viewable therethrough. And, such a display can be called a light-transmitting display. TOLED (transparent OLED), AMOLED (active matrix OLED) and the like are representative examples of the light-transmitting displays. And, a rear structure of the display can have the light-transmitting configuration as well. Owing to this structure, a user is able to see a thing situated in rear of the terminal body via the region occupied by the terminal body.

According to an implementation type of the mobile terminal 100, at least two displays 151 can exist in the mobile terminal 100. For instance, a plurality of displays can be arranged on one face of the mobile terminal 100 in a manner of being spaced apart from each other or being built in one body. For another instance, a plurality of displays can be arranged on different faces of the mobile terminal 100, respectively.

In case that the display 151 and a sensor for detecting a touch action (hereinafter called 'touch sensor') of such a pointer as a user's finger, a pen and the like configures a mutual layer structure (hereinafter called 'touchscreen'), it is able to use the display 151 as an input device as well as an output device. In this case, the touch sensor can be configured with a touch film, a touch sheet, a touchpad or the like for example.

The touch sensor can be configured to convert a pressure applied to a specific portion of the display 151 or a variation of a capacitance generated from a specific portion of the display 151 to an electric input signal. Moreover, it is able to configure the touch sensor to detect a pressure of a touch as well as a touched position or size.

If a touch input is made to the touch sensor, signal(s) corresponding to the touch is transferred to a touch controller. The touch controller processes the signal(s) and then transfers the processed signal(s) to the controller 180. Therefore, the controller 180 is able to know which portion of the display 151 is touched.

A proximity sensor 141 can be provided to an internal area of the mobile terminal 100 enclosed by the touchscreen or around the touchscreen. The proximity sensor is the sensor that detects a presence or non-presence of an object approaching a prescribed detecting surface or an object existing around the proximity sensor using an electromagnetic field strength or infrared ray without mechanical contact. Hence, the proximity sensor has durability longer than that of a contact type sensor and also has utility wider than that of the contact type sensor.

The proximity sensor can include one of a transmittive photoelectric sensor, a direct reflective photoelectric sensor, a mirror reflective photoelectric sensor, a radio frequency oscillation proximity sensor, an electrostatic capacity proximity sensor, a magnetic proximity sensor, an infrared proximity sensor and the like. In case that the touchscreen includes the electrostatic capacity proximity sensor, it is configured to detect the proximity of a pointer using a variation of electric field according to the proximity of the pointer. In this case, the touchscreen (touch sensor) can be classified as the proximity sensor.

In the following description, for clarity, an action that a pointer approaches without contacting with the touchscreen to be recognized as located on the touchscreen is named 'proximity touch'. And, an action that a pointer actually touches the touchscreen is named 'contact touch'. The meaning of the position on the touchscreen proximity-touched by the pointer means the position of the pointer which vertically opposes the touchscreen when the pointer performs the proximity touch.

The proximity sensor detects a proximity touch and a proximity touch pattern (e.g., a proximity touch distance, a proximity touch duration, a proximity touch position, a proximity touch shift state, etc.). And, information corresponding to the detected proximity touch action and the detected proximity touch pattern can be outputted to the touchscreen.

The audio output module 152 functions in various modes including a call-receiving mode, a call-placing mode, a recording mode, a voice recognition mode, a broadcast reception mode and the like to output audio data which is received from the wireless communication unit 110 or is stored in the memory 160. During operation, the audio output module 152 outputs audio relating to a particular function (e.g., call received, message received, etc.). The audio output module 152 is often implemented using one or more speakers, buzzers, other audio producing devices, and combinations thereof.

The alarm unit 153 is output a signal for announcing the occurrence of a particular event associated with the mobile terminal 100. Typical events include a call received event, a message received event and a touch input received event. The alarm unit 153 is able to output a signal for announcing the event occurrence by way of vibration as well as video or audio signal. The video or audio signal can be outputted via the display 151 or the audio output unit 152. Hence, the display 151 or the audio output module 152 can be regarded as a part of the alarm unit 153.

The haptic module 154 generates various tactile effects that can be sensed by a user. Vibration is a representative one of the tactile effects generated by the haptic module 154. Strength and pattern of the vibration generated by the haptic module 154 are controllable. For instance, different vibrations can be outputted in a manner of being synthesized together or can be outputted in sequence.

The haptic module 154 is able to generate various tactile effects as well as the vibration. For instance, the haptic module 154 generates the effect attributed to the arrangement of pins vertically moving against a contact skin surface, the effect attributed to the injection/suction power of air though an injection/suction hole, the effect attributed to the skim over a skin surface, the effect attributed to the contact with electrode, the effect attributed to the electrostatic force, the effect attributed to the representation of hold/cold sense using an endothermic or exothermic device and the like.

The haptic module 154 can be implemented to enable a user to sense the tactile effect through a muscle sense of finger, arm or the like as well as to transfer the tactile effect through a direct contact. Optionally, at least two haptic modules 154 can be provided to the mobile terminal 100 in accordance with the corresponding configuration type of the mobile terminal 100.

The memory 160 can store programs for the processing and control of the controller 180 and is also able to perform a function for temporary storage of inputted/outputted data (e.g., phonebook data, message data, still picture data, moving picture data, etc.). Moreover, the memory 160 can store data of various patterns of vibration and sound outputted in case of the touch input to the touchscreen.

The memory 160 may include at least one storage medium of such a type as a flash memory type, a hard disk type, a multimedia card micro type, a card type memory (e.g., SD memory, XD memory, etc.), RAM, SRAM(Static Random Access Memory), ROM, EEPROM(Electrically Erasable Programmable Read-Only Memory), PROM(Programmable Read-Only Memory) and the like. Moreover, the mobile terminal 100 is able to operate a web storage that performs a storage function of the memory 160 on internet.

The interface unit 170 plays a role as an interface with every external device connected to the mobile terminal 100. For instance, the external devices include a wire/wireless headset, an external electricity charger, a wire/wireless data port, a card socket (e.g., memory card socket, SIM/UIM card socket, etc.), audio I/O (input/output) terminals, video I/O (input/output) terminals, earphones, etc. The interface unit 170 receives data from the external device or is supplied with power. The interface unit 170 then delivers the received data or the supplied power to the corresponding component within the mobile terminal 100 or transmits data within the portable terminal 100 to the corresponding external device.

The identity module is the chip for storing various kinds of information for authenticating a use authority of the mobile terminal 100 and can include User Identify Module (UIM), Subscriber Identify Module (SIM), Universal Subscriber Identity Module (USIM) and/or the like. A device having the identity module (hereinafter called 'identity device') can be manufactured as a smart card. Therefore, the identity device is connectible to the mobile terminal 100 via the corresponding port.

When the mobile terminal 110 is connected to an external cradle, the interface unit 170 becomes a passage for supplying the mobile terminal 100 with a power from the cradle or a passage for delivering various command signals inputted from the cradle by a user to the mobile terminal 100. Each of the various command signals inputted from the cradle or the power can operate as a signal enabling the mobile terminal 100 to recognize that it is correctly loaded in the cradle.

The controller 180 normally controls overall operations of the mobile terminal 100. For instance, the controller 180 performs the control and processing related to speech call, data communication, video call and the like. And, the controller 180 can be provided with a multimedia play module 181 for multimedia playback as well. The multimedia playback module 180 can be configured as hardware within the controller 180 or software separate from the controller 180.

The controller 180 is able to perform a pattern recognizing processing for recognizing a handwriting input or a drawing input performed on the touchscreen into a character and an image, respectively.

The power supply 190 receives an external and/or internal power source and then supplies power required for operations of the respective components, under the control of the controller 180.

Various embodiments described herein may be implemented in a computer-readable medium using, for example, computer software, hardware, or some combination thereof.

For a hardware implementation, the embodiments described herein may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a selective combination thereof. Such embodiments may also be implemented by the controller 180.

For a software implementation, the embodiments described herein may be implemented with separate software modules, such as procedures and functions, each of which perform one or more of the functions and operations described herein. The software codes can be implemented with a software application written in any suitable programming language and may be stored in the memory 160, and executed by the controller 180.

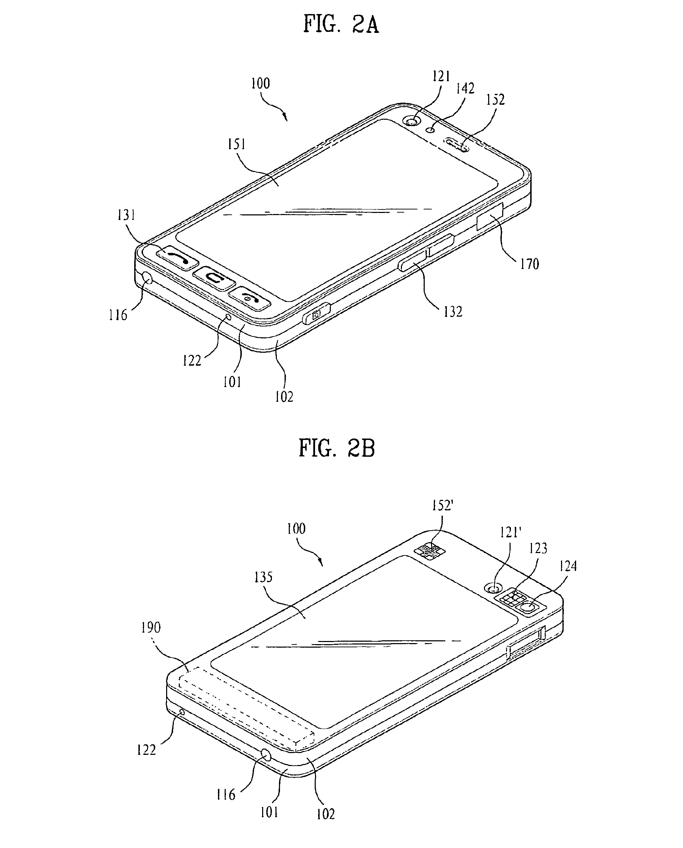

FIG. 2A is a front perspective diagram of a mobile terminal according to one embodiment of the present invention.

The mobile terminal 100 shown in the drawing has a bar type terminal body.

Yet, the mobile terminal 100 may be implemented in a variety of different configurations. Examples of such configurations include a folder type, a slide type, a rotational type, a swing type and combinations thereof. For clarity, further disclosure will primarily relate to a bar-type mobile terminal 100. However such teachings apply equally to other types of mobile terminals.

Referring to FIG. 2, a body of the mobile terminal 100 includes a case (e.g., a casing, a housing, a cover, etc.) configuring an exterior thereof. According to the present embodiment, the case can be divided into a front case 101 and a rear case 102. Various electric/electronic parts are loaded in a space provided between the front and rear cases 101 and 102. Optionally, at least one middle case can be further provided between the front and rear cases 101 and 102 in addition.

The cases 101 and 102 are formed by injection molding of synthetic resin or can be formed of metal substance such as stainless steel (STS), titanium (Ti) or the like for example.

A display 151, an audio output unit 152, a camera 121, a user input unit 130 (131/132), a microphone, an interface 170 and the like can be provided to the terminal body, and mainly, to the front case 101.

The display 151 occupies most of a main face of the front case 101. The audio output unit 151 and the camera 121 are provided to an area adjacent to one of both end portions of the display 151, while the first user input unit 131 and the microphone 122 are provided to another area adjacent to the other end portion of the display 151. The second user input unit 132, the interface 170 and the like can be provided to lateral sides of the front and rear cases 101 and 102.

The user input unit 130 is manipulated to receive an input of a command for controlling an operation of the terminal 100. And, the input unit 130 is able to include a plurality of manipulating units 131 and 132. The manipulating units 131 and 132 can be generally named a manipulating portion and may adopt any mechanism of a tactile manner that enables a user to perform a manipulating action by experiencing a tactile feeling. Contents inputted by the manipulating units 131 and 132 can be diversely set. For instance, such a command as start, end, scroll and the like is inputted to the first manipulating unit 131. And, a command for a volume adjustment of sound outputted from the audio output unit 152, a command for a switching to a touch recognizing mode of the display 151 or the like can be inputted to the second manipulating unit 132.

FIG. 2B is a perspective diagram of a backside of the mobile terminal shown in FIG. 2A.

Referring to FIG. 2B, a camera 121' can be additionally provided to a backside of the terminal body, and more particularly, to the rear case 102. The camera 121 has a photographing direction that is substantially opposite to that of the former camera 121 shown in FIG. 2A and may have pixels differing from those of the former camera 121.

Preferably, for instance, the former camera 121 has low pixels enough to take and transmit a picture of user's face for a video call, while the latter camera 121' has high pixels for capturing a general subject for photography without transmitting the captured subject.

And, each of the cameras 121 and 121' can be installed at the terminal body to be rotatable or popped up.

A flash 123 and a mirror 124 are additionally provided adjacent to the camera 121'. The flash 123 projects light toward a subject in case of photographing the subject using the camera 121'. In case that a user attempts to take a picture of the user (self-photographing) using the camera 121', the mirror 124 enables the user to view user's face reflected by the mirror 124.

An additional audio output unit 152' can be provided to the backside of the terminal body. The additional audio output unit 152' is able to implement a stereo function together with the former audio output unit 152 shown in FIG. 2A and may be used for implementation of a speakerphone mode in talking over the terminal.

A broadcast signal receiving antenna 124 can be additionally provided to the lateral side of the terminal body as well as an antenna for communication or the like. The antenna 124 constructing a portion of the broadcast receiving module 111 shown in FIG. 1 can be retractably provided to the terminal body.

A power supply unit 190 for supplying a power to the mobile terminal 100 is provided to the terminal body. And, the power supply unit 190 can be configured to be built within the terminal body. Alternatively, the power supply unit 190 can be configured to be detachably connected to the terminal body.

A touchpad 135 for detecting a touch can be additionally provided to the rear case 102. The touchpad 135 can be configured in a light transmitting type like the display 151. In this case, if the display 151 is configured to output visual information from its both faces, it is able to recognize the visual information via the touchpad 135 as well. The information outputted from both of the faces can be entirely controlled by the touchpad 135. Alternatively, another display is further provided to the touchpad 135 so that a touchscreen can be provided to the rear case 102 as well.

The touchpad 135 is activated by interconnecting with the display 151 of the front case 101. The touchpad 135 can be provided in front or rear of the display 151 in parallel. The touchpad 135 can have a size equal to or smaller than that of the display 151.

In the following description, a mobile terminal according to one embodiment of the present invention is explained. For clarity of the following description of a mobile terminal according to one embodiment of the present invention, assume that the mobile terminal mentioned in the following description includes at least one of the former components shown in FIG. 1. In particular, a mobile terminal, to which the present invention is applicable, includes a sensing unit 140 configured to obtain information necessary for a focal distance of a 3D image, a display unit 151 outputting a video and a controller 180 controlling the display unit 151 in accordance with the information obtained by the sensing unit 150.

The sensing unit 140 is provided to a surface of the mobile terminal 100 or can be installed within the mobile terminal 100. And, the sensing unit 140 detects a position information of a viewer for the display unit 151. for instance, the viewer's position information includes a distance D between a viewer and a video panel of the display unit 151 and a deflection degree of a binocular center M of a viewer for a vertical center axis C of the display unit 151 (i.e., the video panel 155 that will be described later). Preferably, the deflection degree is an angle (i.e., a deflection angle θ) formed by the vertical center axis C of the display unit 151 and the binocular center M of the viewer in a transverse plane of a human body on which both eyes of the user are situated.

In order to measure a distance D between a viewer and the display unit 151 or a deflection angle θ, the sensing unit 140 can include a proximity sensor 141 or a distance sensor 142.

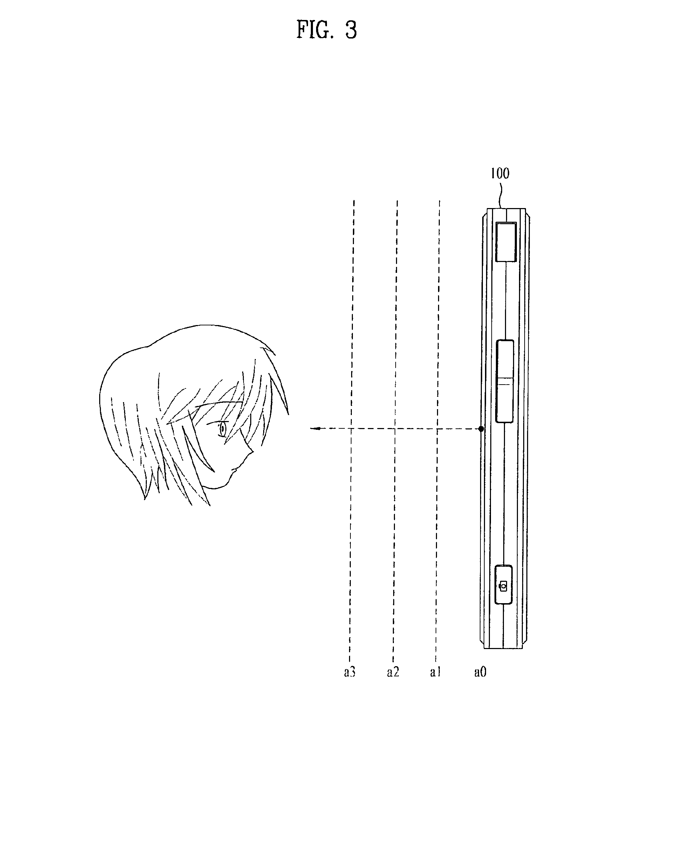

FIG. 3 is a conceptional diagram for describing a proximity depth of the proximity sensor 141 if the sensing unit 140 includes the proximity sensor 141.

Referring to FIG. 3, if such a pointer as a viewer's face and the like comes close to the touchscreen, the proximity sensor 141 provided inside or in the vicinity of the touchscreen detects the pointer and then outputs a proximity signal.

In this case, the proximity sensor 141 can be configured to output a proximity signal differing in accordance with a distance (hereinafter named a proximity depth) between the proximately situated pointer and the display unit 151.

FIG. 3 shows a cross-section of the display unit 151 provided with the proximity sensor 141 capable of three proximity depths for example. And, it is a matter of course that a proximity sensor capable of detecting at least four proximity depths can be provided.

In particular, in case that the pointer is brought into full contact with the display unit 151 [a0], a viewer is recognized as brought into contact with the display unit 151. In case that the pointer is situated over the display unit 151 in a manner of being spaced apart from the display unit 151 in a distance smaller than a distance a1, a viewer is recognized as situated in the distance a1 from the display unit 151. In case that the pointer is situated over the display unit 151 in a manner of being spaced apart from the display unit in a distance between the distance a1 and a distance a2, a viewer is recognized as situated in the distance a2 from the display unit 151. In case that the pointer is situated over the display unit 151 in a manner of being spaced apart from the display unit in a distance between the distance a2 and a distance a3, a viewer is recognized as situated in the distance a3 from the display unit 151, which will be described in detail later. In case that the pointer is situated over the display unit 151 in a manner of being spaced apart from the display unit in a distance over the distance a3, the proximity sensor 141 is recognized as deactivated.

Therefore, the controller 180 is able to recognize how far the user is spaced apart from the display unit 151 (or the video panel 155 described in the following description) [D] through various input signals in accordance with the proximity depth, the proximity position and the like of the pointer. And, the controller 180 is able to perform various operation controls in accordance with the various input signals.

Moreover, the present invention adopts a plurality of proximity sensors 141 arranged within the display unit in a manner of being distributed in a plurality of directions to sense the proximity depth and the proximity position, thereby detecting a degree that the viewer's binocular center M is deflected on the vertical center axis C of the display unit 151 using the above-mentioned principle of the proximity sensor 141.

Meanwhile, the sensing unit 140 can include the distance sensor 142.

The distance sensor 142 can be provided to the surface or instance of the mobile terminal 100. The distance sensor 142 is a device for measuring a distance D from an object (e.g., a viewer) situated in front. And, the distance sensor 142 is operable by a method of calculating a distance by measuring a time difference of ultrasonic waves that are emitted and then return by reflecting from a target object for a distance of the target object. Alternatively, a ultraviolet ray or laser using method is available for this distance measurement.

The sensing unit 140 can include the camera 121 of the A/V input unit. Preferably, the camera 121 can include a VT (video telecommunication) camera.

In this case, the camera 121 is used as an eye detection device by interconnecting with the controller. For this, the camera 121 acquires a viewer's face image. The controller 180 extracts all boundary lines attributed to the brightness differences in the acquired face image. And, the controller 180 detects positions of both eyes of the viewer by analyzing the considerable brightness difference between the ocular conjunctiva and the pupil. A distance between both eyes and a position of the binocular center M (i.e., a center of the distance between both eyes) are measured from the position of both eyes detected via the camera 121. The distance D between the viewer and the display unit 151 is calculated from the distance between both eyes by the controller 180, which will be explained later. And, the deflection angle θ formed by the binocular center M and the vertical center axis C of the display unit 151 is calculated by the controller, which will be explained later. In general, as the distance between both eyes measured via the camera further increases, the distance between the display unit and the viewer further increases as well, by which the present invention is non-limited.

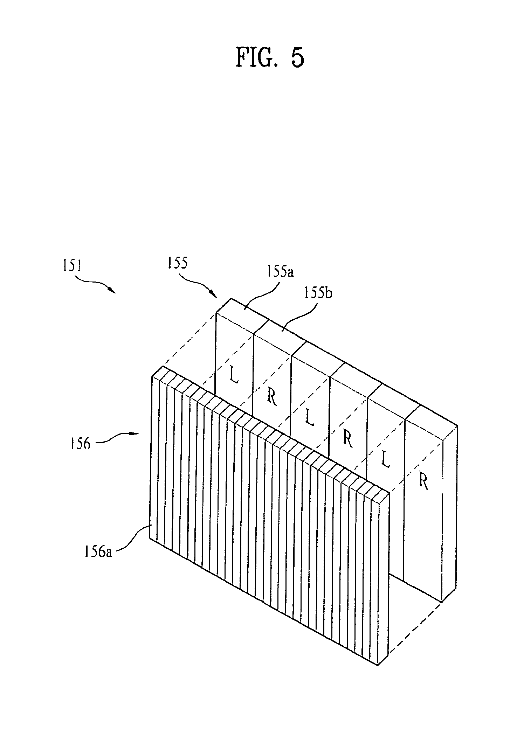

FIG. 5 is a schematic perspective diagram of a display unit including a barrier layer according to one embodiment of the present invention.

Referring to FIG. 5, the display unit 151 includes a video panel 155 displaying an image and a barrier layer 156 enabling a viewer to recognize the image displayed on the video panel 155 as a 3D image. In this case, the barrier layer 156 is preferably configured by a parallax barrier system.

Preferably, the video panel 155 includes a panel capable of displaying both of a 2D image and a 3D (stereoscopic) image. The video panel 155 includes a plurality of pixels or subpixels. And, the video panel 155 can include one of LED, such LCD as STN-LCD and TFT-LCD, such OLED as PMOLED and AMOLED and the like for example.

In case that the video panel 155 displays a 3D image thereon, the video panel 155 alternately displays left eye images 155a and right eye images 155b in parallel with each other. In doing so, each of the left eye images 155a or each of the right eye images 155b can be displayed by a unit of pixels or subpixels. In the following description, each of the left eye images 155a or each of the right eye images 155b shall be described by a unit of pixels.

The barrier layer 156 is positioned in front of the video panel 155 in a manner of being spaced apart from the video panel 155 in a predetermined distance. In case that the video panel 155 alternately displays the left eye images 15a and the right eye images 155b in parallel with each other, the barrier layer 156 plays role in just forming the left eye image 155a and the right eye image 155b on the viewer's left eye and the viewer's right eye, respectively. For this, the barrier layer 156 includes a plurality of light cutoff parts 157 and a plurality of spaces (or light transmittive parts) provided between a plurality of the light cutoff parts 157, respectively. The light cutoff part 157 prevents the left eye image 155a of the video panel 155 from being formed on the user's right eye and also prevents the right eye image 155b of the video panel 155 from being formed on the user's left eye.

The barrier layer 156 includes a plurality of subpixels 156a. In particular, each of the subpixels 156a of the barrier layer 156 has a size (or pitch) smaller than that of a unit pixel of each of the left eye images 155a of the video panel 155 or a unit pixel of each of the right eye images 155b of the video panel 155. For instance, referring to FIG. 5, the subpixel 156a of the barrier layer 156 can be configured to enable the unit pixel of each of the left eye images 155a or the unit pixel of each of the right eye images 155b to correspond to five subpixels 156a of the barrier layer 156. Of course, the number of the subpixels 156a of the barrier layer 156 corresponding to the unit pixel of the video panel 155 can be further incremented or decremented.

Although the barrier layer 156 can include a panel similar to the video panel 155, it preferably includes a TOLED (transparent OLED) panel. In particular, the TOLED panel works in a following manner. First of all, if a power is not applied to the TOLED panel, the TOLED panel becomes transparent like glass. Secondly, if a power is supplied to the TOLED panel, an image can be displayed on the TOLED panel. Thus, if the barrier layer 156 includes the TOLED panel, when a 2D image is displayed on the video panel 155, the light cutoff part 157 of the barrier layer 156 is turned off to enable a viewer to clearly watch the 2D image by avoiding the obstruction of viewer's vision field due to the light cutoff part 157. In particular, if the barrier layer 156 includes the TOLED panel, the viewer is able to selectively watch the 2D image or the 3D image on a single mobile terminal 100.

Since the TOLED panel of the barrier layer 156 needs to form the light cutoff part 157 only in case of supplying a power, it is preferable that the TOLED panel of the barrier layer 156 is the TOLED panel capable of displaying a single color (e.g., black) instead of displaying a plurality of colors. Thus, the present invention uses the single-color TOLED, thereby saving a manufacturing cost of the barrier layer 156.

As the barrier layer 156 includes the TOLED constructed with a plurality of the subpixels 156a, the position and length of the light cutoff part 157 and the space between the light cutoff parts 157 can be freely adjusted by the controller 180 to correspond to a position of the viewer, as described in the following description.

The controller 180 receives position information of the viewer from the sensing unit 140 and plays a role in controlling the video panel 155 or the barrier layer 156 using the received viewer's position information. In particular, in accordance with the viewer's position information received from the sensing unit 140, the controller 180 adjusts the length of the light cutoff part 157 of the barrier layer 156, the space between the light cutoff parts 157 or the displacement (e.g., a moving extent, a moving direction, etc.) of the light cutoff part 157.

In case that the viewer's position information sensed by the sensing unit 140 is the distance D between the display unit 151 and the viewer, the controller 180 searches control variables previously set or stored in the memory 160 of the mobile terminal for the length decision value of the light cutoff part 157 corresponding to the distance D between the display unit 151 and the viewer or the space decision value between a plurality of the light cutoff parts 57 corresponding to the distance D between the display unit 151 and the viewer. In this case, the length or space decision value corresponding to the distance D indicates the length of the light cutoff part or the space between the light cutoff parts to form a focal position of a 3D image to enable a viewer to watch a 3D image clearly if the viewer is situated in the distance of 'D'.

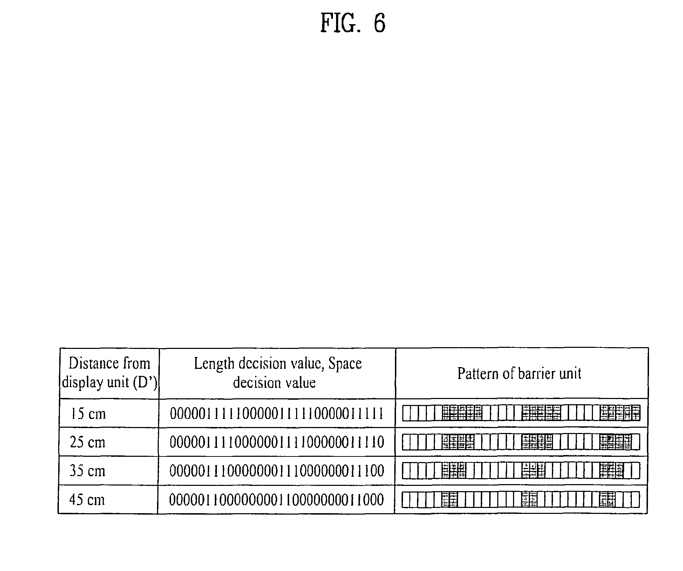

The distance D between the display unit 151 and the viewer, which is previously set or stored in the memory 160 of the mobile terminal, and the length decision value of the light cutoff part 157 or the space decision value between the light cutoff parts 157, which corresponds to the distance D, are exemplarily represented as a data table shown in FIG. 6" by which the present invention is non-limited.

FIG. 6 is an exemplary table of data including a length decision value and a space decision value, each of which corresponds to a distance between a viewer and a display unit.

Referring to FIG. 6, if the distance D between the display unit 151 and the viewer is 25 cm, the length decision value of the light cutoff part 157 is 1111 and the space decision value between the light cutoff parts 157 is 000000. As mentioned in the following description, in case that the D is 25 cm, when the controller 180 turns on/off the subpixel156a of the barrier layer 156 to correspond to each of the length decision value and the space decision value, it is able to obtain such a barrier patter (i.e., the light cutoff part 157) as shown in FIG. 6.

Thus, the length decision value or the space decision value is previously set or stored in the memory 160. And, it is just necessary to search for the length decision value or the space decision value, which corresponds to a user's position from the sensing unit 140. Therefore, a computing processor, which is provided to calculate a corresponding length of the light cutoff part 157 or a corresponding space between the light cutoff parts 157 in accordance with a user's position in each case, is not required in addition, whereby the number of component parts decreases to save a manufacturing cost. Moreover, a time taken for performing the steps from the step of detecting the viewer's position information to the step of forming the light cutoff parts is considerably shortened, whereby the viewer can be provided within a clear 3D image more quickly.

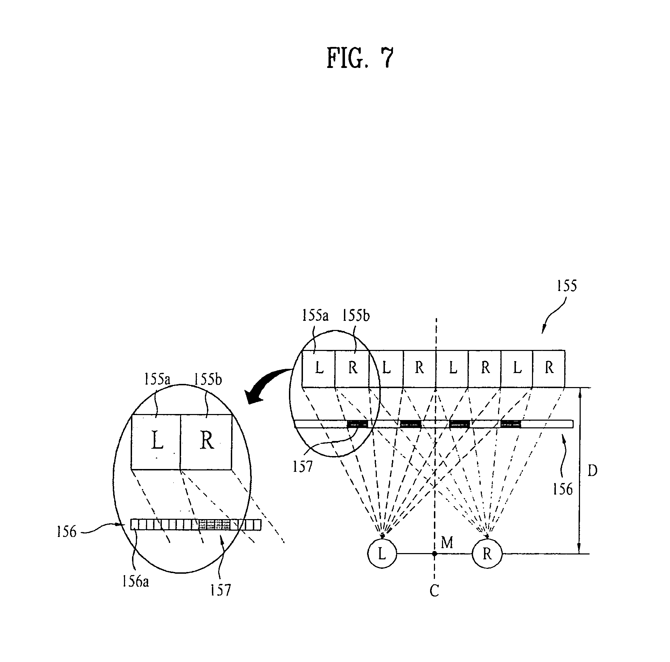

After completion of the step of searching the memory 160 for the control variables, the controller 180 controls ON/OFF of each of the subpixels 156a of the barrier layer 156 to correspond to the length decision value of the light cutoff part 157 and the space decision value between the light cutoff parts 157, which are found from the memory 160. And, the result of the ON/OFF control is exemplarily shown in FIG. 7.

FIG. 7 is an exemplary schematic diagram of a display unit if a distance between a viewer and a display unit is set to 25 cm.

Referring to FIG. 7, the controller 180 forms the light cutoff part 157 by controlling the ON/OFF of each of the subpixels 156a of the barrier layer 156 in accordance with the length decision value of the light cutoff part 157 and the space decision value between the light cutoff parts 157, which are found from the memory 160. In the found length decision value of the light cutoff part 157 and the found space decision value between the light cutoff parts 157, '1' corresponds to the ON state of the corresponding subpixel 156a of the barrier layer 156. If the subpixel 156a of the barrier layer 156 is in the ON state, the corresponding subpixel 156a of the barrier layer 156 becomes the light cutoff part 157. On the contrary, in the found length decision value of the light cutoff part 157 and the found space decision value between the light cutoff parts 157, '0' corresponds to the OFF state of the corresponding subpixel 156a of the barrier layer 156. If the subpixel 156a of the barrier layer 156 is in the OFF state, the corresponding subpixel 156a of the barrier layer 156 becomes the space between the light cutoff parts 157.

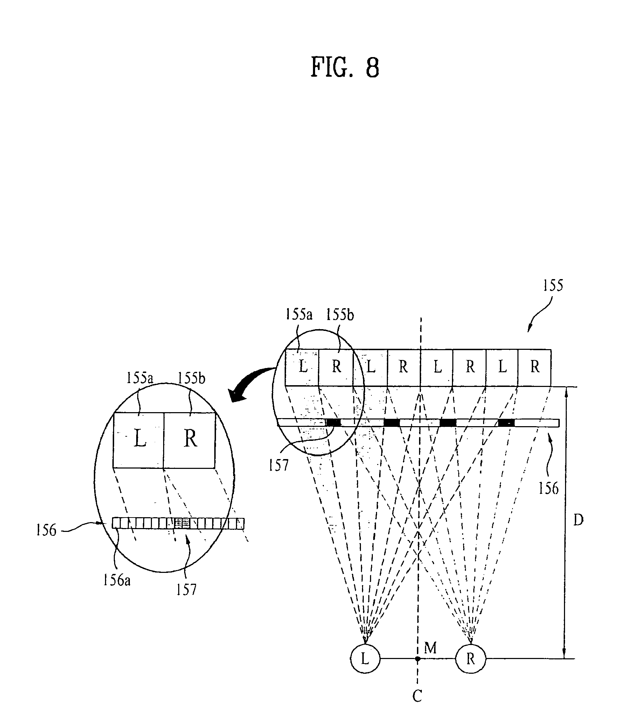

FIG. 8 shows the length decision value of the light cutoff part 157 and the space decision value between the light cutoff parts 157 in the barrier layer 156 if the D is set to 45 cm.

As mentioned in the foregoing description, the controller 180 searches the control variables stored in the memory 160 for the length decision value (e.g., 11) of the light cutoff part 157 and the space decision value (e.g., 00000000) between the light cutoff parts 157, which are found from the memory 160 and then controls the ON/OFF state of each of the subpixels 156a of the barrier layer according to the decision values. Thus, the controller 180 enables a viewer to watch a clear 3D image at a current position (i.e., the position having the D set to 45 cm).

Comparing FIG. 7 to FIG. 8, it can be observed that the latter light cutoff part shown in FIG. 8 has a length smaller than that of the former light cutoff part shown in FIG. 7 for example (i.e., the length of the former light cutoff part is reduced by 2 subpixels), by which the present invention is non-limited.

In the following description, when the D in the data included in the data table shown in FIG. 6 is set to 25 cm, in case that a viewer deviates from the vertical center axis C of the display unit 151 to the right or left, a corresponding barrier pattern shall be described.

First of all, in case that a viewer's position information sensed by the sensing unit 140 is a deflection angle θ, which is previously set or stored in the memory 160 of the mobile terminal 100, of a binocular center M of the viewer for a vertical center axis C of the display unit 151 (or the video panel 155), the controller 180 searches the control variables previously set or stored in the memory 160 of the mobile terminal 100 for a displacement decision value including a moving extent and a moving direction, which corresponds to the deflection angle θ of the viewer's binocular center M for the vertical center axis C of the display unit 151.

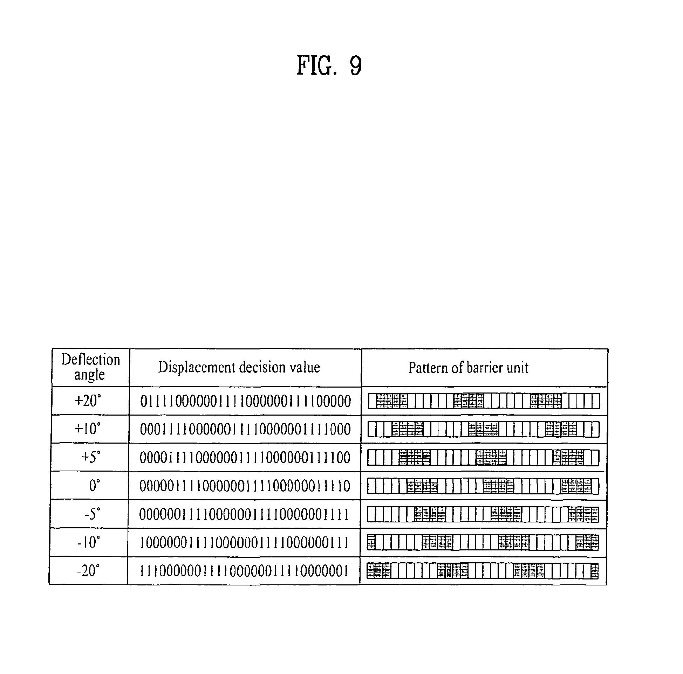

A deflection angle θ, which is previously set or stored in the memory 160 of the mobile terminal 100, of a binocular center M of the viewer for a vertical center axis C of the display unit 151 (or the video panel 155) and a corresponding displacement decision value of the light cutoff part 157 are represented as a data table shown in FIG. 9. The table shown in FIG. 9 is just exemplary, by which the present invention is non-limited. In this case, the displacement decision value corresponding to the θ includes the moving extent and the moving direction of the light cutoff part for forming a focal position of a 3D image to enable a viewer to watch a 3D image clearly. The sign '+' followed by the deflection angle means that the binocular center M of the viewer is deflected to the left side of the vertical center axis C of the display unit. And, the sign '-' followed by the deflection angle means that the binocular center M of the viewer is deflected to the right side of the vertical center axis C of the display unit.

Referring to FIG. 6 and FIG. 9, if the deflection angle θ is 0 (i.e., a viewer is not deflected at all), the displacement decision value of the light cutoff part 157 is 000001111000000111100000011110 for example. Yet, if the deflection angle θ is +10, the displacement decision value of the light cutoff part 157 is 000111100000011110000001111000 for example. As mentioned in the following description, the controller 180 is able to obtain such a barrier pattern as shown in FIG. 9, if turning on/off the subpixel 156 of the barrier layer 156 to correspond to the displacement decision value in case that the deflection angle θ is +10.

Thus, the displacement decision value is preset or stored in the memory 160. It is then able to search for the displacement decision value in accordance with a user position from the sensing unit 140. Therefore, a computing processor required for calculating the moving extent and the moving direction of the light cutoff part 157 in accordance with the user's position for each case is not separately necessary, whereby a manufacturing cost can be reduced by decreasing the number of the manufactured components parts. Moreover, a time taken for performing the steps form the step of detecting the viewer's position information to the step of forming the light cutoff parts 157 is considerably shortened, whereby the viewer can be provided within a clear 3D image more quickly.

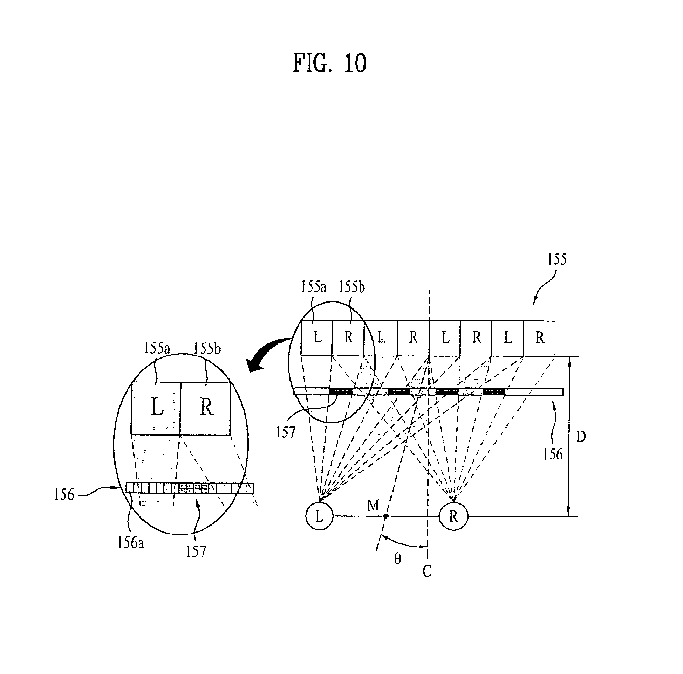

After completion of the step of searching the memory 160 of the mobile terminal for the control variables, the controller 180 controls ON/OFF of each of the subpixels 156a of the barrier layer 156 to correspond to the displacement decision value of the light cutoff part 157, which is found from the memory 160. And, the result of the ON/OFF control is exemplarily shown in FIG. 10.

FIG. 10 is an exemplary schematic diagram of a display unit if a distance between a viewer and a display unit and a deflection angle are set to 25 cm and +10 degrees, respectively.

Referring to FIG. 10, the controller 180 forms the light cutoff part 157 by controlling the ON/OFF of each of the subpixels 156a of the barrier layer 156 in accordance with the displacement decision value of the light cutoff part 157, which is found from the memory 160. In the found displacement value of the light cutoff part 157, '1' corresponds to the ON state of the corresponding subpixel 156a of the barrier layer 156. If the subpixel 156a of the barrier layer 156 is in the ON state, the corresponding subpixel 156a of the barrier layer 156 becomes the light cutoff part 157. On the contrary, in the found displacement decision value of the light cutoff part 157, '0' corresponds to the OFF state of the corresponding subpixel 156a of the barrier layer 156. If the subpixel 156a of the barrier layer 156 is in the OFF state, the corresponding subpixel 156a of the barrier layer 156 becomes the space between the light cutoff parts 157.

In particular, the controller 180 searches the memory 160 and controls the ON/OFF of each of the subpixels 156a of the barrier layer 156. If the deflection angle θ is +10, the controller 180 control the barrier layer 156 (i.e., the light cutoff part 157) to shift the light cutoff part 157 to the left by 2 subpixels 156a more than the displacement decision value at which the viewer is not deflected at all.

Therefore, in the mobile terminal 100 according to the present invention, a viewer is able to clearly watch a 3D image at a current position no mater where the viewer is situated toward the mobile terminal 100. Even if the viewer deviates from an original position in the course of watching the 3D image, the viewer is ale to keep watching the 3D image clearly.

Preferably, the mobile terminal 100 according to the present invention is able to further include a user input unit configured to select an operational mode of a 3D image focal position control. The user input unit capable of selecting the operational mode of the 3D image focal position control can include one of a button provided to an outer surface of the mobile terminal 100 and a virtual keypad on a touchscreen for example, by which the present invention is non-limited.

In this case, the operational mode of the 3D image focal position control includes a first mode and a second mode. The first mode is the mode for fixing a size and position of the light cutoff part 157 of the barrier layer 156 in a following manner. First of all, the sensing unit 140 detects a viewer's position information once during a prescribed period of time before or after a 3D image is displayed on the display unit. Secondly, the controller 180 controls the ON/OFF of a plurality of the subpixels 156a of the barrier layer 156 once in accordance with the position information detected by the sensing unit 140 during the prescribed period of time. Meanwhile, the second mode is the mode for changing the light cutoff part 157 of the barrier layer 156 periodically or by real time in a following manner. First of all, the sensing unit 140 detects a viewer's position information in the course of displaying a 3D image periodically or by real time. Secondly, the controller 180 controls the ON/OFF of a plurality of the subpixels 156a of the barrier layer 156 periodically or by real time in accordance with the position information detected by the sensing unit 140 periodically or by real time.

In the first mode, since each of the subpixels 156a of the barrier layer 156 is controlled once by activating the sensing unit 140 once during a prescribed time, in case that the power supply unit 190 of the mobile terminal 100 includes a battery, the corresponding battery consumption is reduced. Therefore, the first mode is advantageous in increasing a usable time of the mobile terminal 100. In the second mode, even if a viewer moves away from his position in the course of displaying a 3D image, the light cutoff part 157 is changed periodically or by real time. Therefore, the second mode is advantageous in that the viewer is able to always watch a clear 3D image at a current position of the viewer without a different position shift of the viewer. In consideration of a remaining battery level and a comfortable watching posture, in order to watch a 3D image in optimal state, a viewer is able to freely select the first mode or the second mode via the user input unit.

In the following description, a method of controlling a mobile terminal is explained. In particular, a method of controlling a focal position of a 3D image in a mobile terminal 100 according to the present invention is described as follows.

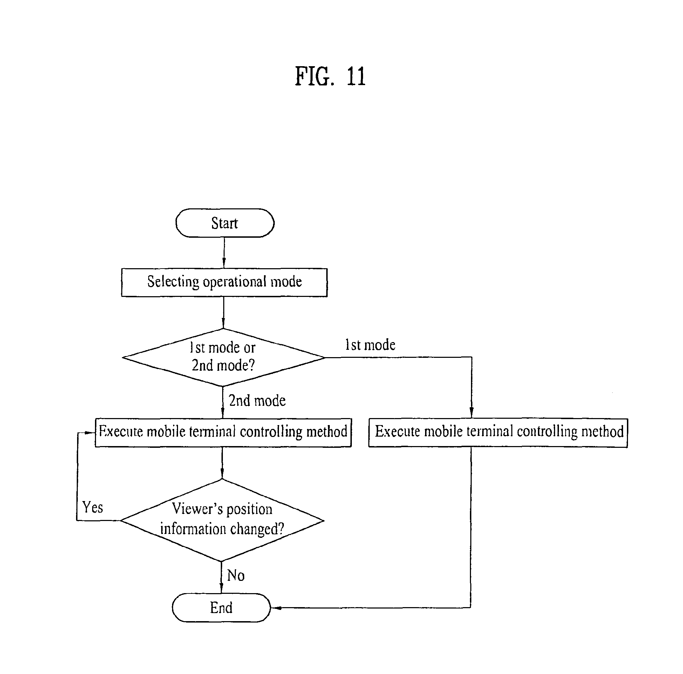

FIG. 11 is a flowchart of a process for selecting an operational mode for a focal position control of a 3D image according to the present invention.

In consideration of a remaining battery level and a comfortable watching posture, referring to FIG. 11, a viewer is able to select a first mode for executing a mobile terminal controlling method according to the present invention once or a second mode for executing a mobile terminal controlling method by real time.

In case that the viewer selects the second mode, the controller determines whether a viewer's position information is changed by real time. If the viewer's position information is changed, the controller controls the mobile terminal to repeat the mobile terminal controlling method according to the present invention.

If the viewer selects either the first mode or the second mode, the following mobile terminal controlling method is executed.

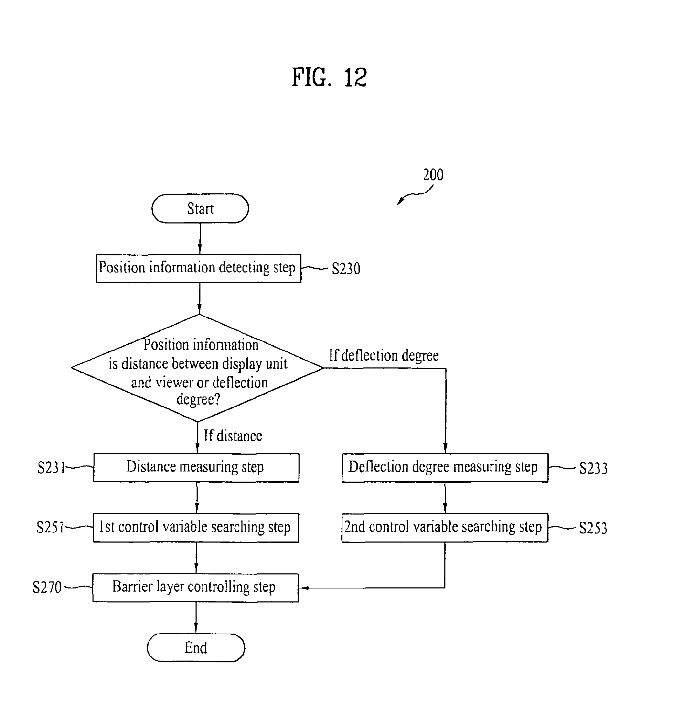

FIG. 12 is a flowchart of a first example 200 of a method of controlling a mobile terminal according to one embodiment of the present invention.

Referring to FIG. 12, a viewer's position information for the display unit 151 is detected via the sensing unit 140 [S230, S231, S233]. In doing so, as mentioned in the foregoing description, the viewer's position information preferably includes the distance D between the display unit 151 and the viewer and the deflection angle θ.

Subsequently, to correspond to the viewer's position information detected by the position information detecting step, the controller 180 searches the memory 160 for at least one of control variables including the length decision value of the light cutoff part 157 of the barrier layer 156, the space decision value between the light cutoff parts 157 and the displacement decision value of the light cutoff part 157 [S251, S253].

Afterwards, the controller 180 controls a length, space or displacement of the barrier layer 156 in accordance with the length decision value, the space decision value or the displacement decision value found in the control variable searching step [S270], thereby enabling the viewer to watch a 3D image clearly at a current position.

In particular, in case that the viewer's position information is the distance D between the display unit and the viewer, the position information detecting step can be executed in a manner of measuring the distance D between the display unit and the viewer [S231].

After the distance D has been measured, the controller 180 searches the control variables in the memory 160 of the mobile terminal 100 for the length decision value of the light cutoff part 157 corresponding to the distance D measured in the distance measuring step and the space decision value between the light cutoff parts 157 corresponding to the distance D measured in the distance measuring step [S251]. After the control variables has been searched, the controller 180 controls the ON/OFF of the subpixel 156a of the barrier layer 156 in accordance with the length decision value and the space decision value found in the control variable searching step [S270]. Therefore, the viewer is able to clearly watch the 3D image at a current position of the viewer.

In particular, in case that the viewer's position information is a deflection degree off a binocular center M of the viewer against a center of the display, the position information detecting step is executed by measuring the deflection angle θ for forming the viewer's binocular center M with reference to the vertical center axis C of the display [S233].

After the deflection angle θ has been measured, the controller 180 searches the control variables in the memory 160 of the mobile terminal 100 for a displacement decision value, which includes a moving extent and a moving direction of the light cutoff part 157, corresponding to the deflection angle θ of the binocular center M measured in the deflection degree measuring step [S253]. After the control variables have been searched, the controller 180 controls the ON/OFF of the subpixel 156a of the barrier layer 156 in accordance with the displacement decision value found in the control value searching step [S270]. Therefore, the viewer is able to clearly watch the 3D image at a current position of the viewer.

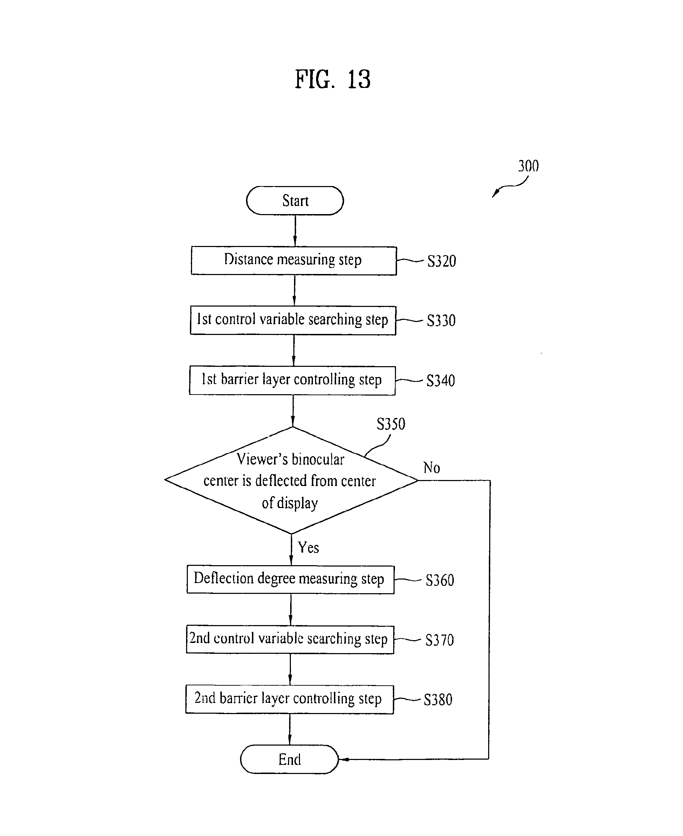

FIG. 13 is a flowchart of a second example 300 of a method of controlling a mobile terminal according to one embodiment of the present invention.

Referring to FIG. 13, the sensing unit measures a distance D between the display unit and a viewer [S320]. In this case, as mentioned in the foregoing description, the sensing unit 140 can include one of the proximity sensor 141, the distance sensor 142 and the camera 121.

Subsequently, the controller 180 searches the memory 160 of the mobile terminal 100 for the length decision value of the light cutoff part 157 of the barrier layer 156 and the space decision value between the light cutoff parts 157 corresponding to the distance D measured by the sensing unit 140 [S330]. In this case, the data represented as the table shown in FIG. 6 or FIG. 9 can be previously set or stored in the memory 160 of the mobile terminal 100.

Afterwards, the controller 180 controls the ON/OFF of a plurality of the subpixels 156a of the barrier layer 156 in accordance with the length decision value and the space decision value found from the memory 160 of the mobile terminal 100 [S340].

Subsequently, the controller 180 determines whether the viewer (i.e., the binocular center M of the viewer) is deflected from the center (i.e., the vertical center axis C) of the display unit 140 via the sensing unit 140 [S350]. In this case, the sensing unit 140 preferably includes the camera 121 equipped with an eye detecting function.

If the controller 180 determines that the viewer is not deflected from the vertical center axis C of the display unit 140, the controller 180 ends the mobile terminal controlling method and then controls a 3D image to be displayed.

On the contrary, if the controller 180 determines that the viewer is deflected from the vertical center axis C of the display unit 140, the controller 180 controls the sensing unit 140 to measure a deflection angle θ formed against the vertical center axis C of the display unit 151 by the viewer's binocular center M [S360].

Subsequently, the controller 180 searches the memory 160 of the mobile terminal 100 for a displacement decision value including a moving direction or degree of the light cutoff part 157 of the barrier layer 156 corresponding to the deflection angle θ measured by the sensing unit 140 [S370].

Thereafter, controller 180 controls the ON/OFF of a plurality of the subpixels 156a of the barrier layer 156 in accordance with the displacement decision value found from the memory 160 of the mobile terminal 100 [S380].

Afterwards, the controller 180 ends the mobile terminal controlling method and then controls a 3D image to be displayed on the display unit 151.

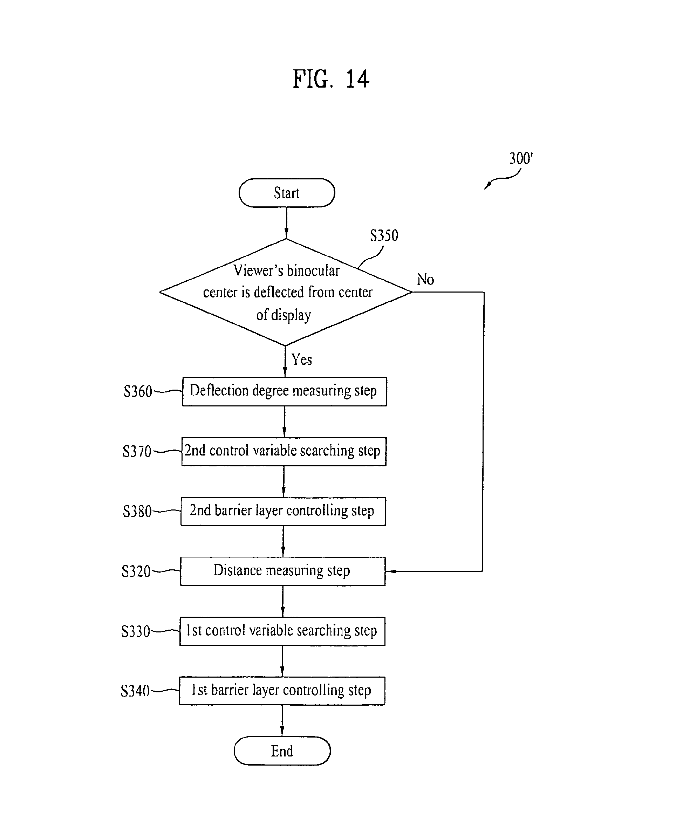

FIG. 14 is a flowchart of a modified 300' example of a method of controlling a mobile terminal according to a second embodiment of the present invention.

Referring to FIG. 14, a modified 300' example of a method of controlling a mobile terminal according to a second embodiment of the present invention includes all the steps included in the former mobile terminal controlling method according to the second embodiment of the present invention but differs from the former mobile terminal controlling method according to the second embodiment the present invention in the corresponding order of the steps.

In particular, in the modified 300' example of the method of controlling the mobile terminal, the step S350 of determining whether the viewer (i.e., the viewer's binocular center M) is deflected from the center (i.e., the vertical center axis C) of the display unit 151 via the sensing unit 140 is executed in the first place. If it is determined that the viewer is not deflected from the center of the display unit, the step S320 of measuring the distance between the viewer and the display unit, the step S330 of searching for the length decision value and the space decision value, and the step S340 of controlling the barrier layer S340 are executed in order. On the contrary, if it is determined that the viewer is deflected from the center of the display unit, the step S360 of measuring the deflection degree, the step S370 of searching for the displacement decision value, the step S380 of controlling the barrier layer, the step S320 of measuring the distance between the viewer and the display unit, the step S330 of searching for the length decision value and the space decision value, and the step S340 of controlling the barrier layer are executed in order.

In the following description, in order to inform a viewer of each step of a mobile terminal controlling method according to the present invention, the steps of a method of controlling a focal position of a 3D image are displayed on a 3D image display of a mobile terminal. And, the mobile terminal including such a 3D image display is explained as follows. In the following description, a virtual keypad is implemented on a touchscreen as a means for inputting a user's selection, by which the present invention is non-limited.

A mobile terminal according to the present invention includes a 3D image display configured to output a 3D image or an information related to the 3D image and a controller 180 controlling the 3D image display.

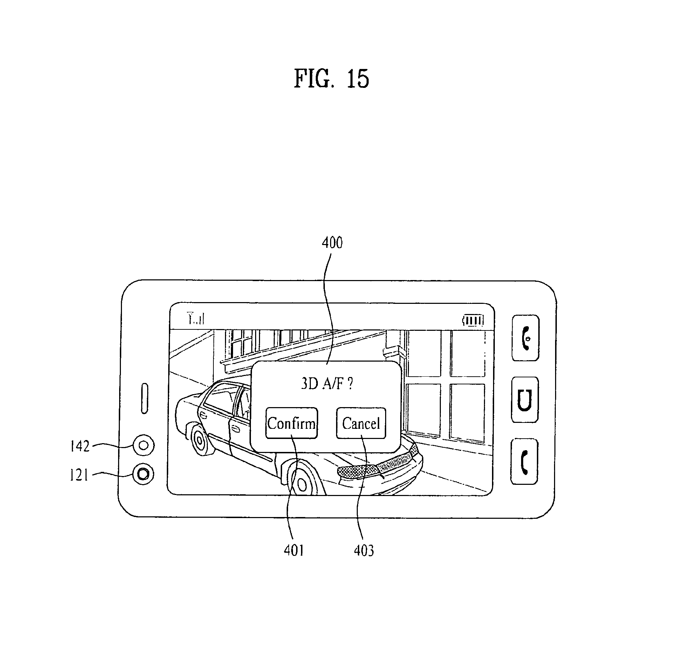

FIG. 15 is an exemplary diagram of a 3D image display configuration for enabling a user to select whether to activate a control function of a focal position of a 3D image. In this case, the controller 180 controls 'whether to activate a control function of a focal position of a 3D image' 400 (i.e., displayed as'3D A/F?' in FIG. 15) to be displayed on the 3D image display.

Referring to FIG. 15, if a viewer selects a confirm 401, the controller 180 activates a 3D image focal position control function of the present invention. If the viewer selects a cancel 403, the controller 180 does not activate the3D image focal position control function of the present invention.

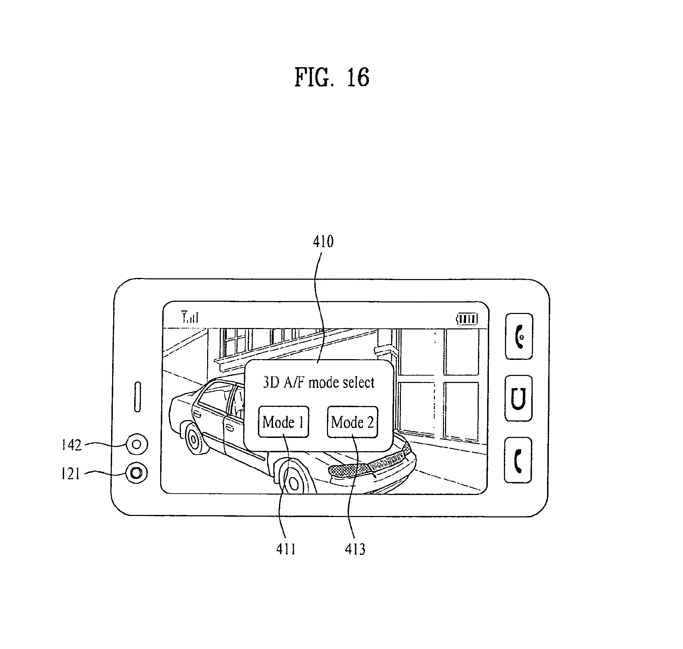

FIG. 16 is an exemplary diagram of a 3D image display configuration for enabling a user to select a focal position control mode 410 of a 3D image. In this case, the controller 180 controls a selection option for a focal position control mode of a 3D image 410 (i.e., displayed as'select 3D A/F mode' in FIG. 14) to be displayed on the 3D image display. The focal position control mode of the 3D image includes a first mode (Mode 1) 411 for automatically adjusting a focal position of a 3D image once and a second mode (Mode 2) 413 for automatically adjusting a focal position of a 3D image periodically or by real time.

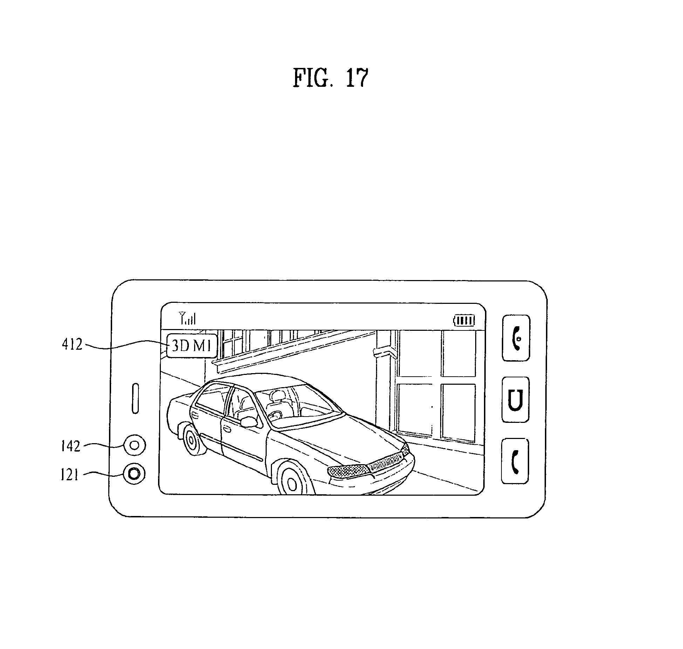

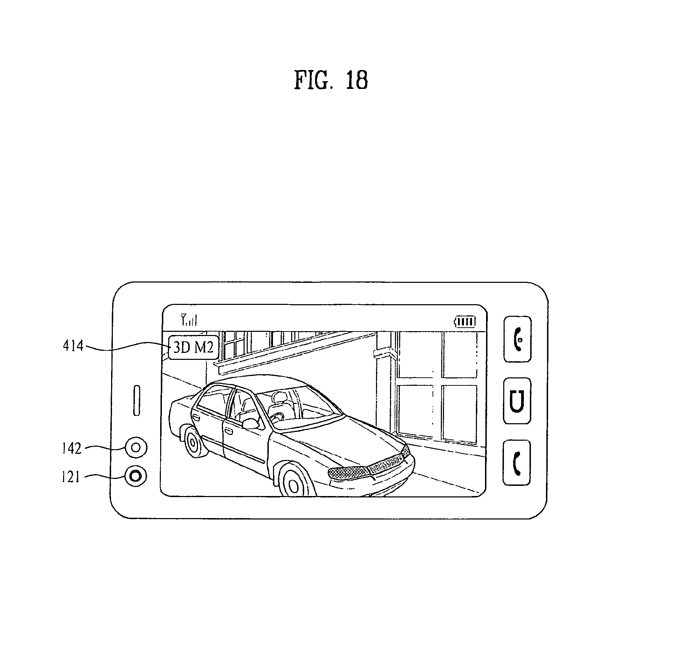

FIG. 17 and FIG. 18 are exemplary display configurations of a first mode and a second mode, respectively. In particular, FIG. 17 exemplarily shows that a currently operating mode 412 is displayed on a 3D image display to inform a viewer that the mode selected by the viewer from the selection option 410 of the focal position control mode of the 3D image is in progress. And, FIG. 18 exemplarily shows that a currently operating mode 414 is displayed on a 3D image display to inform a viewer that the mode selected by the viewer from the selection option 410 of the focal position control mode of the 3D image is in progress. Referring to FIG. 17 and FIG. 18, if the mode selected by the viewer from the selection option 410 of the focal position control mode of the 3D image is the first mode,'3D M1' 412 is displayed on the 3D image display. If the mode selected by the viewer from the selection option 410 of the focal position control mode of the 3D image is the second mode, '3D M2' 414 is displayed on the 3D image display.

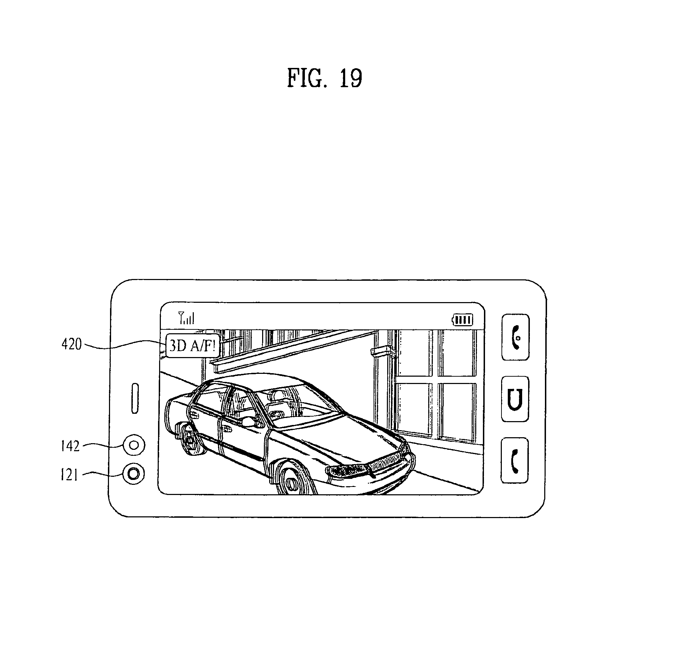

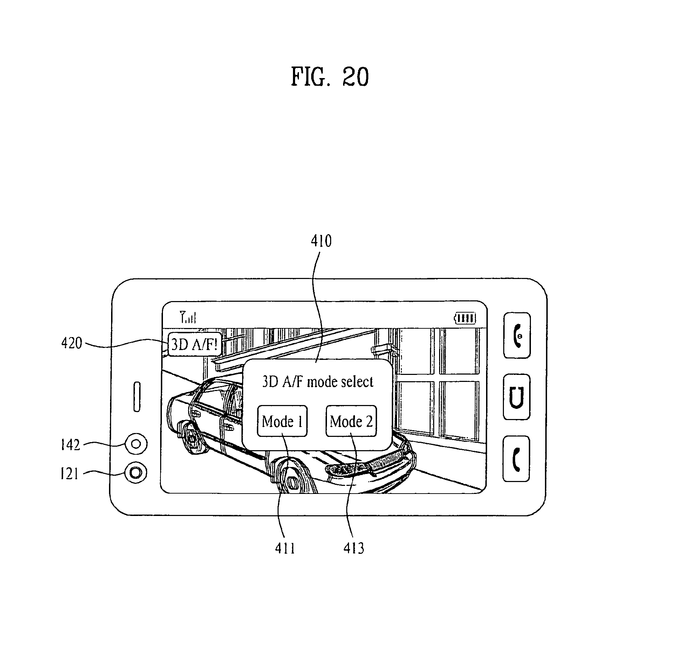

FIG. 19 is an exemplary display configuration for indicating that a viewer has deviated from a focal position of a 3D image. In particular, in case that the focal position control mode of the 3D image is the first mode, when the viewer deviates from the focal position of the 3D image, FIG. 19 schematically shows that an indication 420 of the viewer's deviation is displayed on the 3D image display. FIG. 20 is an exemplary display configuration for indicating an option of a focal position control mode of a 3D image as well as indicating that a viewer has deviated from a focal position of the 3D image. In particular, FIG. 20 schematically shows that the selection option 410 for the focal position control mode of the 3D image is displayed again on the 3D image display in the case shown in FIG. 19.

In case that the viewer selects the second mode 413 from the selection option 410 for the focal position control mode of the 3D image, even if the viewer deviates from the focal position of the 3D image, the focal position of the 3D image is automatically controlled to enable the viewer to watch a clear 3D image again. Yet, if the viewer selects the first mode 411 from the selection option 410 of the focal position control mode of the 3D image, the focal position of the 3D image is fixed. Therefore, if the viewer deviates from the focal position of the 3D image, the viewer has difficulty in watching a clear 3D image. In order to solve such a difficulty or problem, referring to FIG. 19 and FIG. 20, when the 3D image display is in the first mode, if the viewer deviates from the focal position of the 3D image confirmed by the first mode, the controller 180 controls the viewer's deviation to be displayed on the 3D image display and then re-displays the selection option 410 for the focal position control mode of the 3D image on the 3D image display to enable the viewer to re-select the first mode 411 or the second mode 412.

Preferably, the steps included in the method of controlling the focal position of the 3D image according to the present invention can be sequentially or simultaneously displayed on the 3D image display to enable the viewer to recognize them.

The display configurations shown in FIGs. 15 to 20 are just exemplary, by which the present invention is non-limited.

In the following description, a mobile terminal according to another embodiment of the present invention is explained. For clarity and convenience of the following description for a mobile terminal according to another embodiment of the present invention, the mobile terminal 100 mentioned in the following description is assumed as including at least one of the former components shown in Fig. 1. In particular, the mobile terminal 100, to which the present invention is applicable, includes a sensing unit 140 configured to obtain information required for a viewer's position, an output unit 150 configured to provide a guide information on an image or a 3D image, and a controller 180 configured to control the output unit 150 in accordance with the information obtained by the sensing unit 140.

In more particular, the output unit 150 is able to play a role as a guide information providing unit configured to provide a viewer with a guide information on a focal position of the 3D image. In generally, at least one or more output units 150 can be included in the mobile terminal 100. And, the guide information providing unit can include at least one of a display unit 151, an audio output module 152, an illuminating unit 158 and a vibrating unit 159.

The controller 180 receives the viewer's position information from the sensing unit 140. Based on the received viewer's position information, the controller 180 the output unit 150 to provide the viewer with the 3D image or the information on the 3D image. In particular, in case that the viewer deviates from the focal position of the 3D image, the controller 180 controls the guide information providing unit 150 to provide the viewer with the guide information for enabling the viewer to be situated at the focal position of the 3D image or the guide information for enabling the mobile terminal to be situated at the focal position of the 3D image.

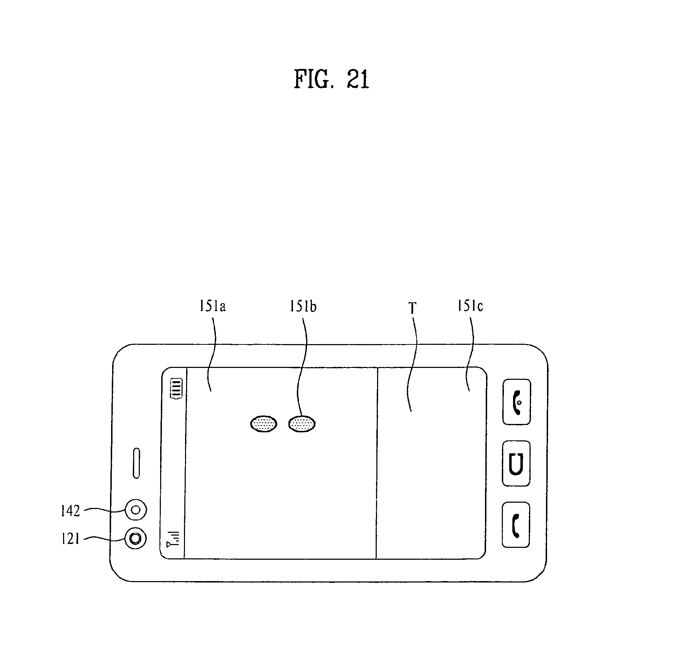

FIG. 21 is a schematic diagram of a mobile terminal according to another embodiment of the present invention, in which a region corresponding to a focal position of a 3D image is displayed on a display unit. In particular, FIG. 21 shows configurations displayed on the guide information providing unit 150 if the guide information providing unit 150 includes the display unit 151.

Referring to FIG. 21, a screen of the display unit 151 includes a subject part for displaying a shape of a viewer photographed via a camera, a binocular position region 151b displayed in the subject part 151a, and an instruction part 151c provided on a right side of the subject part 151a to instruct the viewer of a moving direction.

In this case, the binocular position region 151b means a position where the viewer is able to watch a clearest 3D image. In more particular, in case that the viewer makes both eyes coincide with the binocular position region, the binocular position region 151b means the position at which the viewer is able to watch a clearest 3D image on the 3D image display unit. As is the case of the focal position of the 3D image, the corresponding position is fixed as well.

Preferably, the binocular position region 151b is visually activated before the 3D image is displayed or played. Therefore, the viewer is able to find the focal position of the 3D image by looking at the binocular position region 151b. Yet, while the 3D image is being displayed, although whether both eyes of the user deviate from the binocular position region 151b is only detected by the eye detection device including the camera and the controller, since the binocular position region 151b is visually deactivated, the viewer has no difficulty in watching or viewing the 3D image. Besides, the binocular position region 151b can be indicated by a hatching region of an oval type, as exemplarily shown in FIG. 21, by which the present invention is non-limited.

The controller 180 controls the display unit to display an information indicating that the viewer is not situated at the focal position (i.e., the binocular position region) of the 3D image and also controls the guide information on top/bottom/left/right moving directions and/or back and forth moving directions of the mobile terminal to be displayed on the instruction part 151c situated on the right side of the subject part 151a in order to facilitate the viewer to be situated at the focal position of the 3D image. In this case, the guide information provided to the viewer by the instruction part 151c can include at least one of a text constructed with characters and/or numerals, a top/bottom/left/right direction image of a character, a back and forth direction image of a character, and a moving picture in which a character is moving in top/bottom/left/right directions or back and forth directions, or a combination thereof.

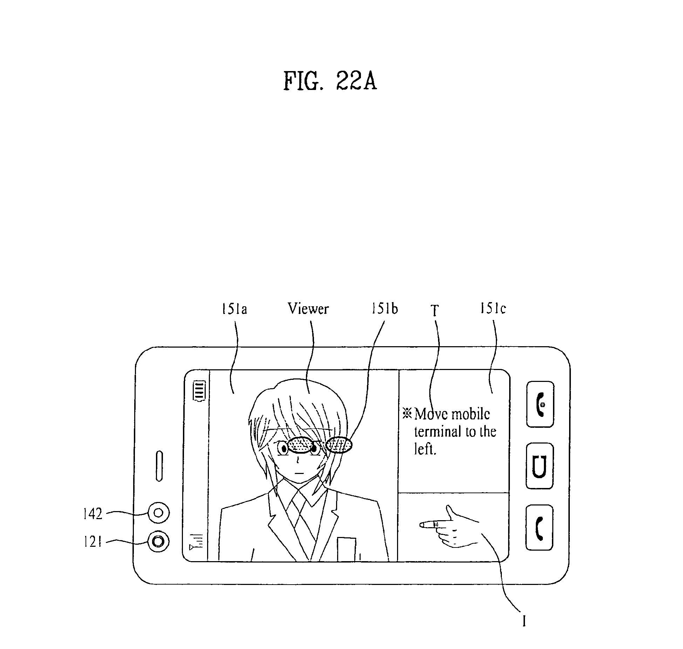

FIGs. 22A to 22G are schematic diagrams of a guide information providing unit according to a first embodiment of the present invention, in which the output unit 150 of the present invention is shown.

Referring to FIGs. 22A to 22G, the controller 180 controls the display unit 151 to display the guide information for enabling a viewer to move a position of the mobile terminal to situate both eyes of the viewer in the binocular position region 151b in accordance with a viewer's position or the guide information for a case that both eyes of the viewer are situated in the binocular position region 151b in a manner of displaying a character I, a text T or a combination of the character and the text on the instruction part 151c of the screen of the display unit 151. In this case, the character T has a shape of a hand or fingers of a human body for example.

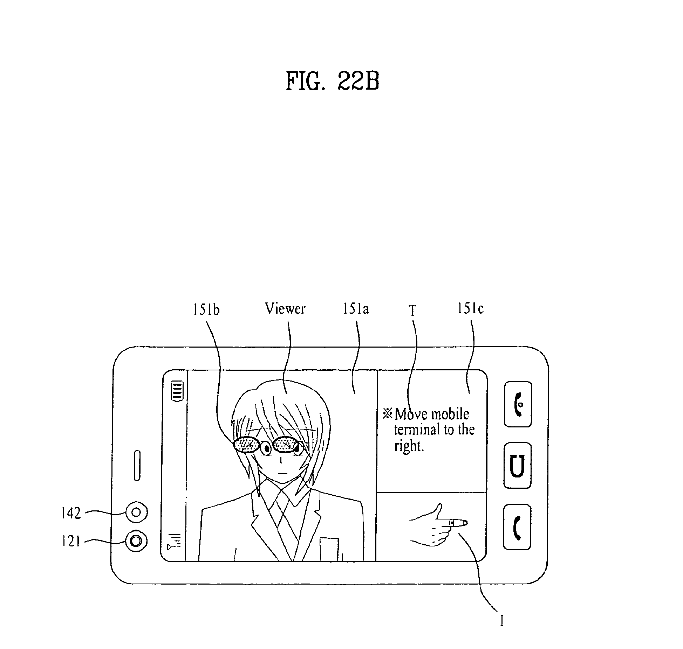

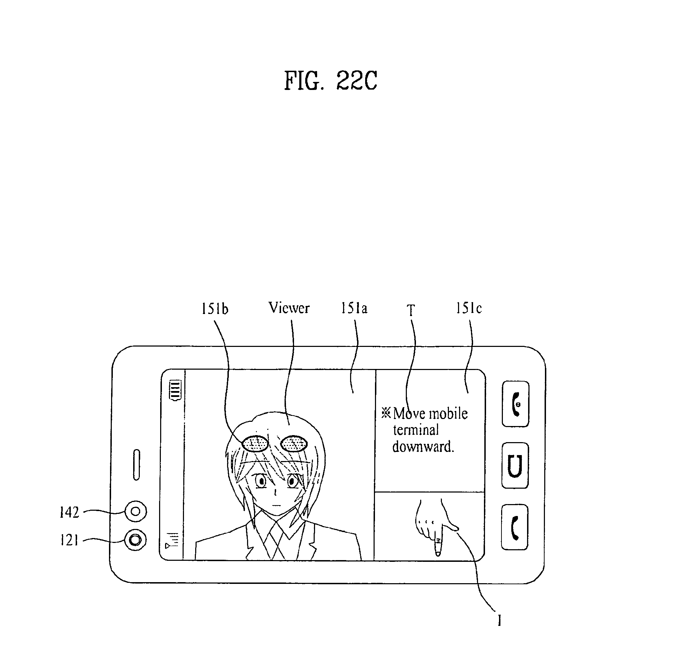

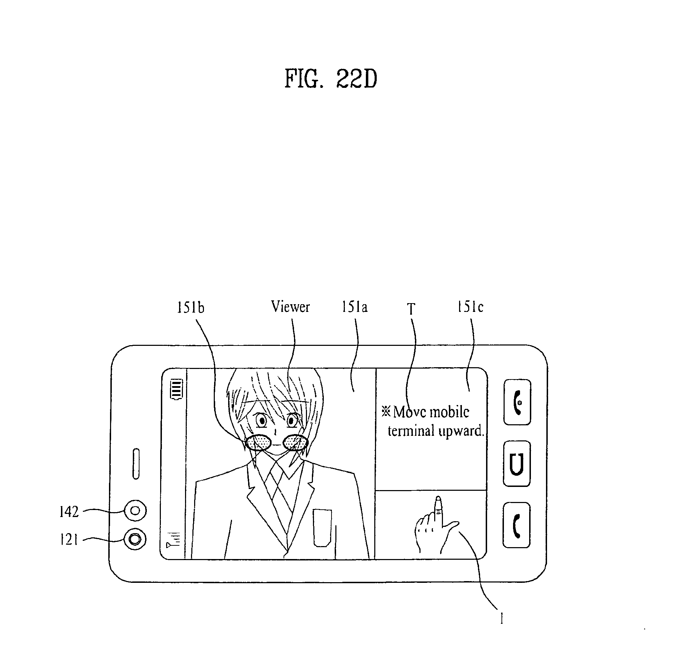

Referring to FIG. 22A, when a viewer (i.e., both eyes of the viewer) is deflected to the left in the binocular position region 151b, the controller 180 controls the display unit 151 to display the text T indicating 'Move the mobile terminal to the left.' or the character I of the hand shape having an index finger face to the left on the instruction part 151c. Referring to FIG. 22B, when a viewer (i.e., both eyes of the viewer) is deflected to the right in the binocular position region 151b, the controller 180 controls the display unit 151 to display the text T indicating 'Move the mobile terminal to the right.' or the character I of the hand shape having an index finger face to the right on the instruction part 151c. Referring to FIG. 22C, when a viewer (i.e., both eyes of the viewer) is deflected to the bottom side in the binocular position region 151b, the controller 180 controls the display unit 151 to display the text T indicating 'Move the mobile terminal to the bottom side.' or the character I of the hand shape having an index finger face to the bottom side on the instruction part 151c. Referring to FIG. 22D, when a viewer (i.e., both eyes of the viewer) is deflected to the top side in the binocular position region 151b, the controller 180 controls the display unit 151 to display the text T indicating 'Move the mobile terminal to the top side.' or the character I of the hand shape having an index finger face to the top side on the instruction part 151c.

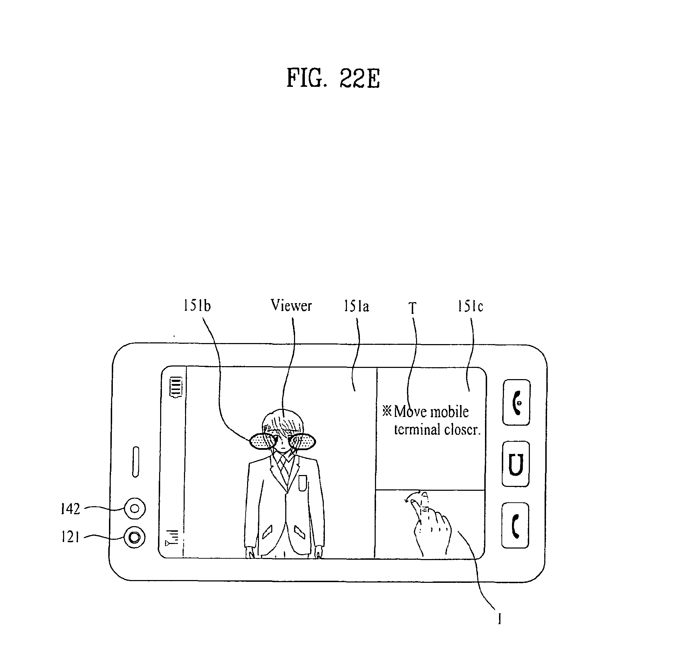

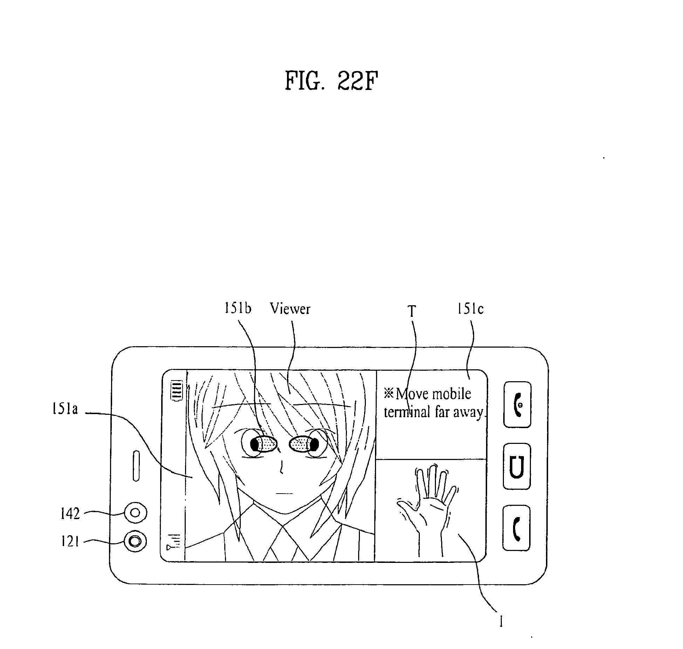

Referring to FIG. 22E, when both eyes of the viewer are far away from the binocular position region 151b, the controller 180 controls the display unit 151 to display the text T indicating 'Move the mobile terminal closer.' or a video image of a hand moving repeatedly in a rear direction of the mobile terminal by having an index finger stand upright (i.e., the index finger alternately moves in front and rear directions of the mobile terminal to indicate'Come closer.') on the instruction region 151c. Likewise, referring to FIG. 22F, when both eyes of the viewer are situated too close to the binocular position region 151b, the controller 180 controls the display unit 151 to display the text T indicating 'Move the mobile terminal far away.' or a video image of a whole palm moving back and forth (i.e., the palm alternately moves in front and rear directions of the mobile terminal to indicate'Stay far away.') on the instruction part 151c.

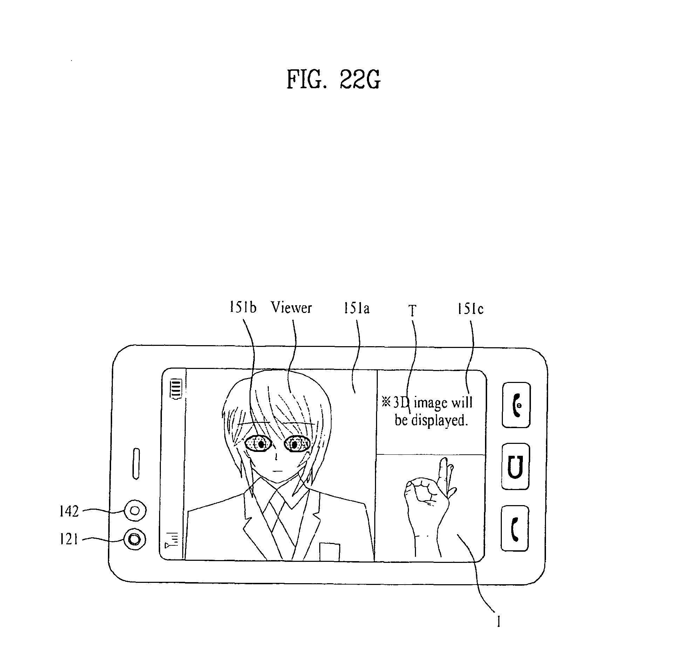

Referring to FIG. 22G, when both eyes of the viewer is situated in the binocular position region 151b (i.e., situated at the correct position), the controller 180 controls the display unit to display the text T of '3D image will be displayed.' or the character I of a hand type having a circular shape with a thumb and an index finger (i.e., sending'OK'sign to the viewer) on the instruction part 151c. Likewise, in case that the viewer deviates from the focal position of the 3D image, the controller 180 controls the display unit to display the guide information indicating that the viewer is not situated at the focal position of the 3D image [not shown in the drawing].

In this case, the moving direction of the mobile terminal, the content of the text T and the character I or video image of the hand type are just exemplary, by which the present invention is non-limited.

As mentioned in the foregoing description, a display unit of a mobile terminal according to the present invention provides a viewer with a guide information for enabling the viewer or the mobile terminal to be situated at a focal position of a 3D image using a text T or a character I, thereby facilitating the viewer to quickly find a focal position of an intangible 3D image. Therefore, a time for watching an unclear or dizzy 3D image is decreased in the course of finding the focal position of the 3D image, whereby the viewer is able to comfortably watch a clear 3D image in a short time.

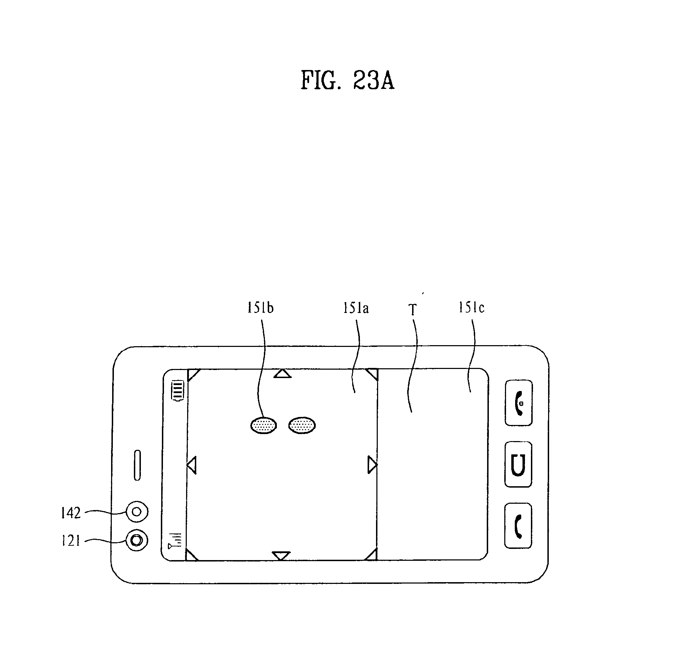

FIGs. 23A to 23C are schematic diagrams of a guide information providing unit 150 according to a second embodiment of the present invention.

Referring to FIGs. 23A to 23C, a guide information providing unit 150 according to a second embodiment of the present invention includes at least one or more direction indication symbol S displayed on a predetermined region of an edge side of the display unit, and more particularly, 9 direction indication symbols S displayed on the predetermined region of the edge side of the display unit. The controller 180 controls the display unit to display a guide information for enabling a viewer to move a position of the mobile terminal or himself to have both eyes of the viewer situated in the binocular position region 151b or a guide information in case that the viewer is situated at a reference position 151b of both eyes, on the predetermined region of the edge side of the display unit (or the subject part 151a) using the direction indication symbol S. Alternatively, as mentioned in the foregoing description of the guide information providing unit 150 according to the first embodiment of the present invention, the controller 180 is able to control the display unit to display a text T corresponding to the direction indication symbol S on the instruction part 151c of the screen of the display unit together with the direction indication symbol S.

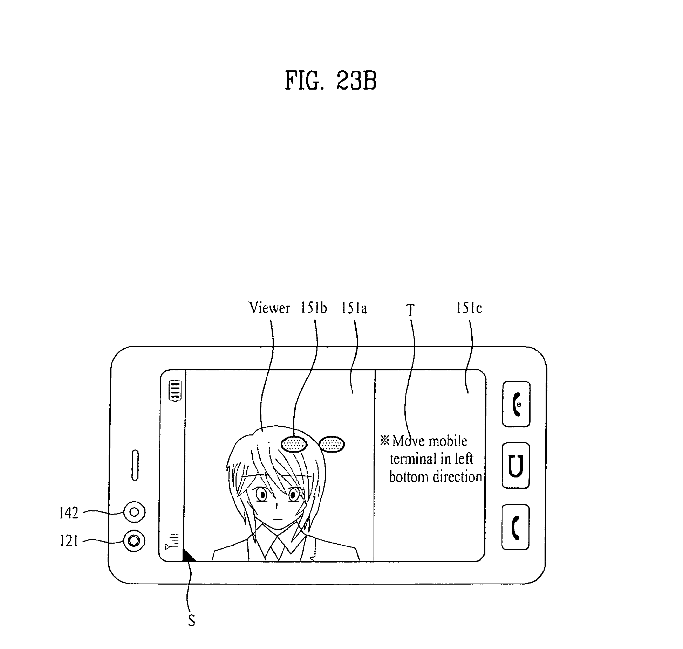

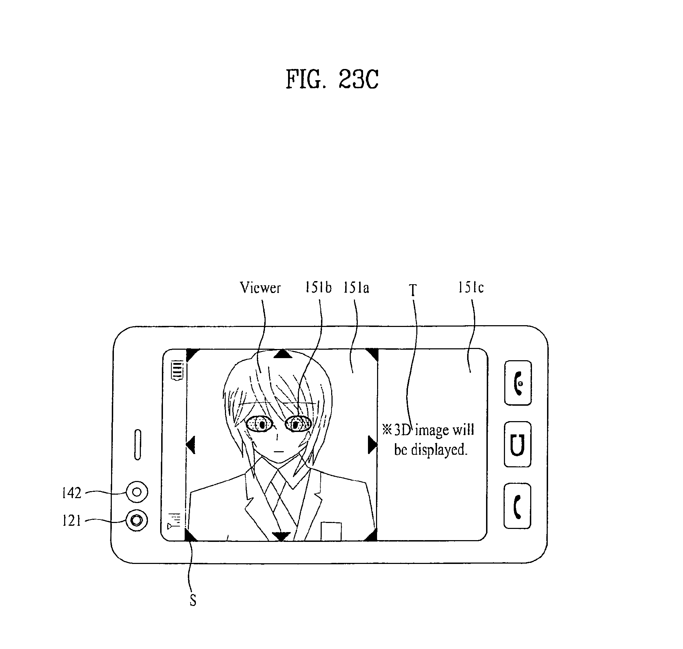

Referring to FIG. 23A, the controller 180 controls the display unit 151 to display a shape of the viewer and the binocular position region 151b within the subject part 151a of the screen of the display unit and also controls the display unit to display the direction indication symbol S on the predetermined region of the edge side of the subject part 151a. Preferably, the direction indication symbol S is not visually activated on the subject part 151a except a case of providing the viewer with the guide information on the focal position of the 3D image. Yet, FIG. 23 shows that direction indication symbol S to exemplarily indicate the position of the direction indication symbol S. Referring to FIG. 23B, for example, in case that both eyes of the viewer is deflected in a left bottom direction from the binocular position region 151b, the direction indication symbol S (i.e., this symbol means'Move the mobile terminal in the left bottom direction.') is visually activated among the direction indication symbols S displayed on the subject part 151a. For another example, in case that both eyes of the viewer are situated in the binocular position region 151b in accordance with the guide information displayed on the display unit 151 (i.e., in accordance with the direction indication symbol S), all of the direction indication symbols S are visually activated to facilitate the viewer to recognize that the viewer is situated at the focal position of the 3D image [cf. FIG. 23C]. The visual activation of the direction indication symbol S is just exemplary, by which the present invention is non-limited.

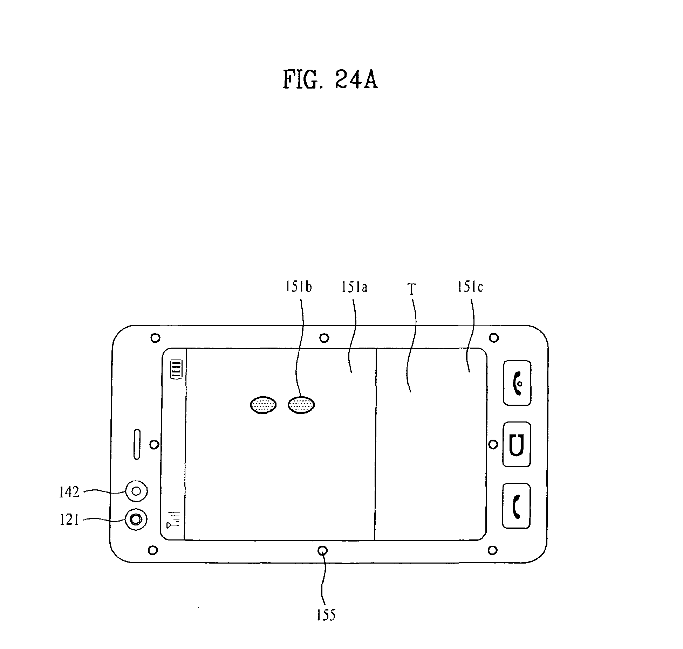

FIGs. 24A to 24C are schematic diagrams of a guide information providing unit 150 according to a third embodiment of the present invention.

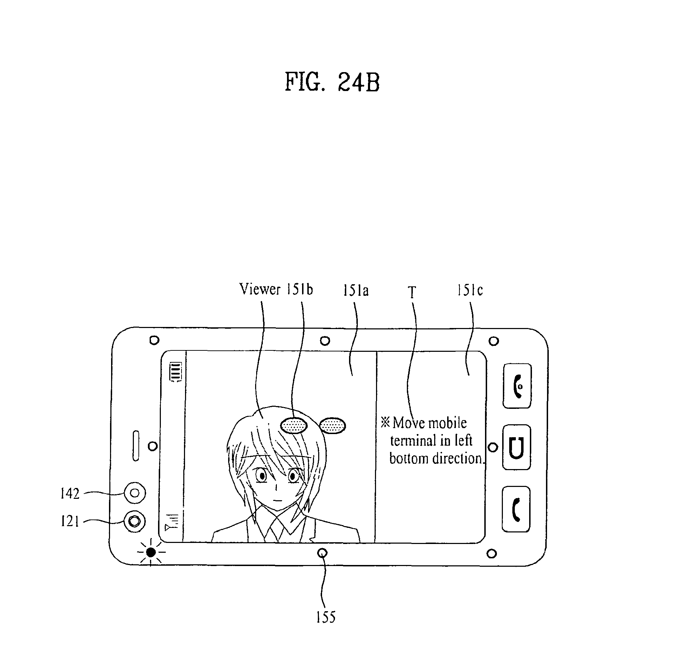

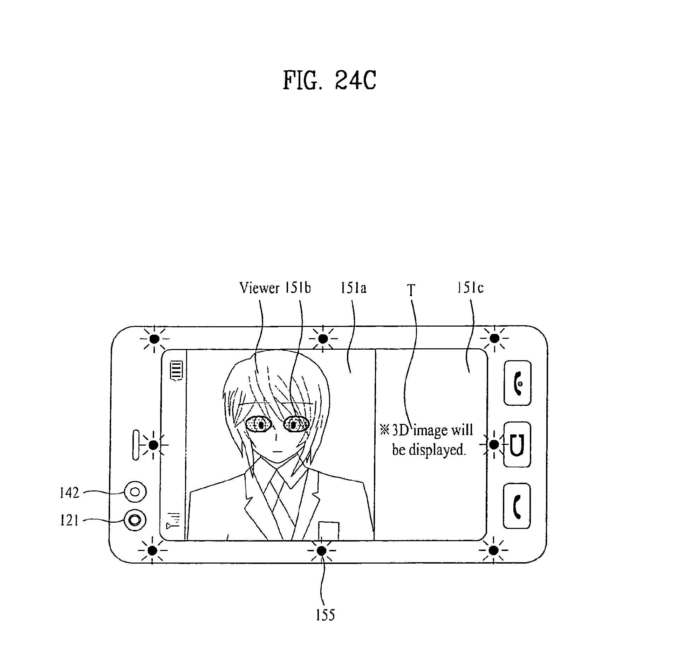

Referring to FIGs. 24A to 24C, a guide information providing unit 150 according to a third embodiment of the present invention includes at least one or more illuminating units 158 (herein 9 illuminating units in FIG. 24) installed on a predetermined region of an edge side of the front case 101 of the mobile terminal 100. Preferably, the illuminating unit 158 includes a single color LED or a multi-color LED. The controller 180 controls the illuminating unit 158 to provide a guide information for enabling a viewer to move a position of the mobile terminal or himself to have both eyes of the viewer situated in the binocular position region 151b or a guide information in case that the viewer is situated at a reference position 151b of both eyes, through the lighting or flickering of a plurality of the illuminating units 158 installed in a predetermined region of the edge side of the front case 102. Alternatively, as mentioned in the foregoing description of the guide information providing unit 150 according to the first embodiment of the present invention, the controller 180 is able to control the display unit to display a text T corresponding to the instruction part 151c of the screen of the display unit together with the lighting or flickering of the illuminating unit(s) 158.

Referring to FIG. 24A, the controller 180 controls the display unit 151 to display a shape of the viewer and the binocular position region 151b within the subject part 151a of the screen of the display unit and a plurality of the illuminating units 158 are installed in the predetermined region of the edge side of the front case 101 of the mobile terminal 100. Referring to FIG. 24B, for example, in case that both eyes of the viewer is deflected in a left bottom direction from the binocular position region 151b, the illuminating unit 158 in the left bottom direction is lighted or flickered (i.e., this lighting or flickering means 'Move the mobile terminal in the left bottom direction.'). For another example, in case that both eyes of the viewer are situated in the binocular position region 151b in accordance with the guide information on the focal position of the 3D image (i.e., in accordance with the flickering or lighting of the illuminating unit 158), all of the illuminating units 158 are lighted or flickered to facilitate the viewer to recognize that the viewer is situated at the focal position of the 3D image [cf. FIG. 24C]. The flickering or lighting of the illuminating unit 158 is just exemplary, by which the present invention is non-limited.

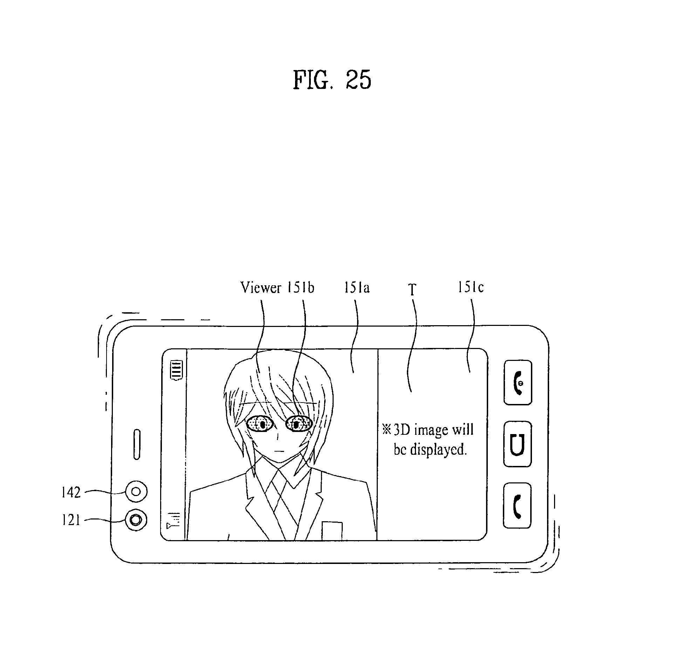

Preferably, in case that both eyes of the viewer are situated in the binocular position region 151b in a manner that the viewer moves the mobile terminal in accordance with the guide information on the focal position of the 3D image displayed on the mobile terminal according to the present invention, the guide information providing unit 150 is able to further include an audio output module or the vibrating unit 159 to inform the viewer that the viewer is situated at the focal position of the 3D image. In particular, in case that the viewer is correctly situated at the focal position of the 3D image (i.e., situated at the correct position), the controller 180 controls the audio output module 152 to generate such a sound as a predetermined voice, a predetermined music and the like or is able to control the vibrating unit 159 to enable the viewer to sense the vibration [cf. FIG. 25].

FIG. 25 is a schematic diagram for an operation of a vibrating unit according to the present invention when a viewer is situated at a focal position of a 3D image.

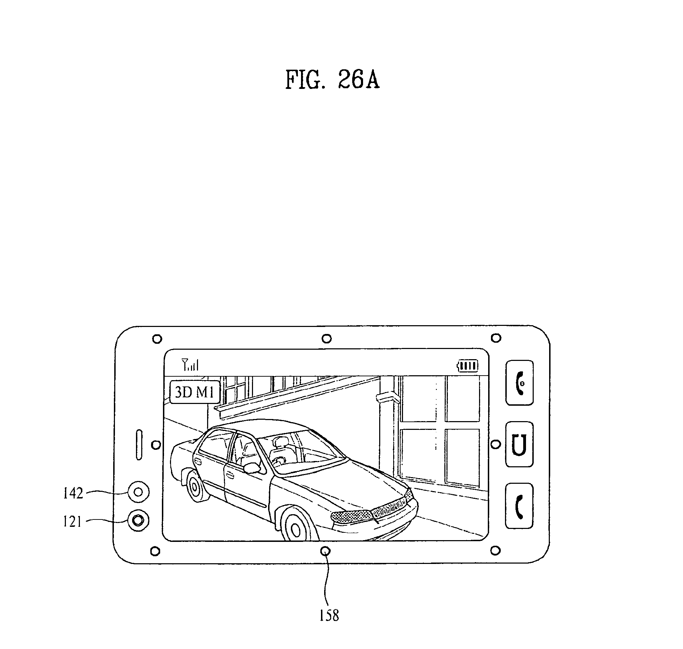

FIGs. 26A to 26C are schematic diagrams of a mobile terminal according to the present invention when a viewer deviates from a focal position of a 3D image in the course of displaying the 3D image on the display unit 151.

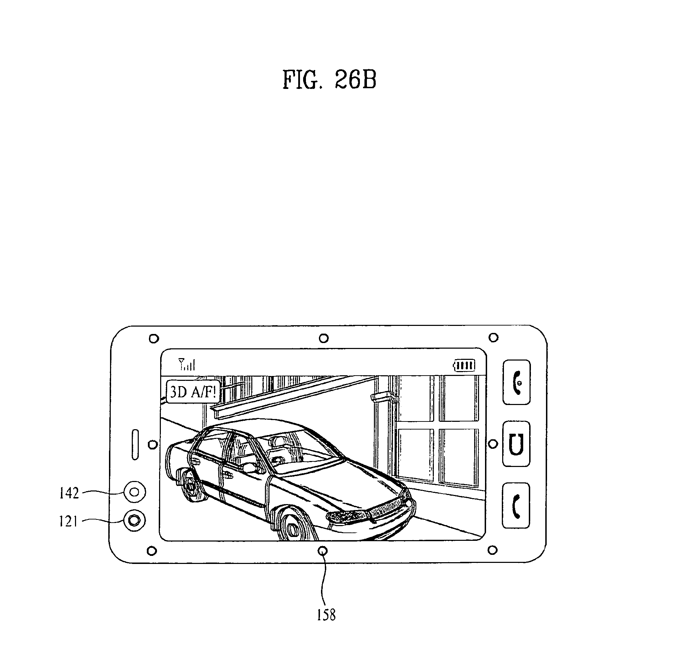

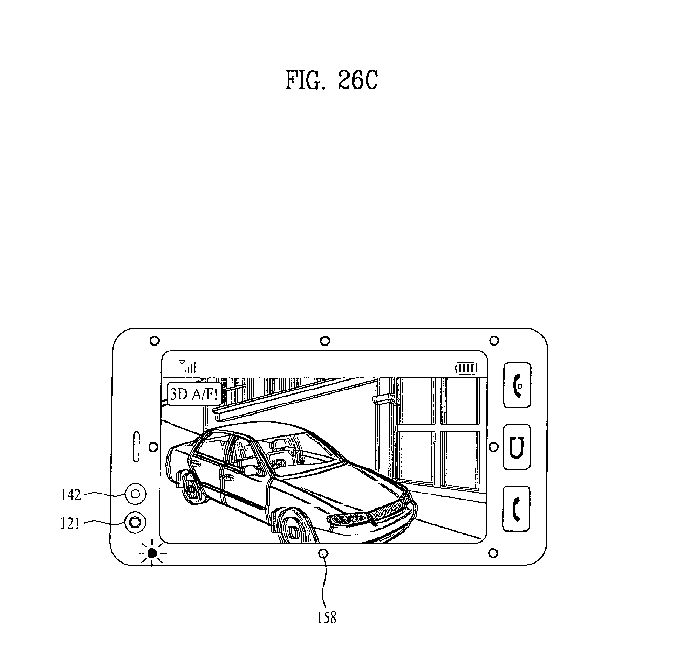

Referring to FIG. 26A, while a viewer is situated at a focal position of a 3D image, in case of watching the 3D image, the viewer is able to watch a clear 3D image. Yet, referring to FIG. 26B, if the viewer deviates from the focal position of the 3D image, the corresponding image is displayed unclear. Referring to FIG. 26C, in order for the viewer to be situated at the focal position of the 3D image again, the controller 180 controls the illuminating unit 158 to provide the viewer with the guide information on the focal position of the 3D image (e.g., the illuminating unit in the left bottom direction is lighted or flickered). Although FIGs. 26A to 26C exemplarily show the case that the guide information providing unit 150 includes the illuminating unit 158, the guide information providing unit 150 can include the display unit 151 or the direction indication symbol S displayed in a preset region of the edge side of the display unit 151.

In the following description, a method of controlling a mobile terminal according to the present invention is explained.

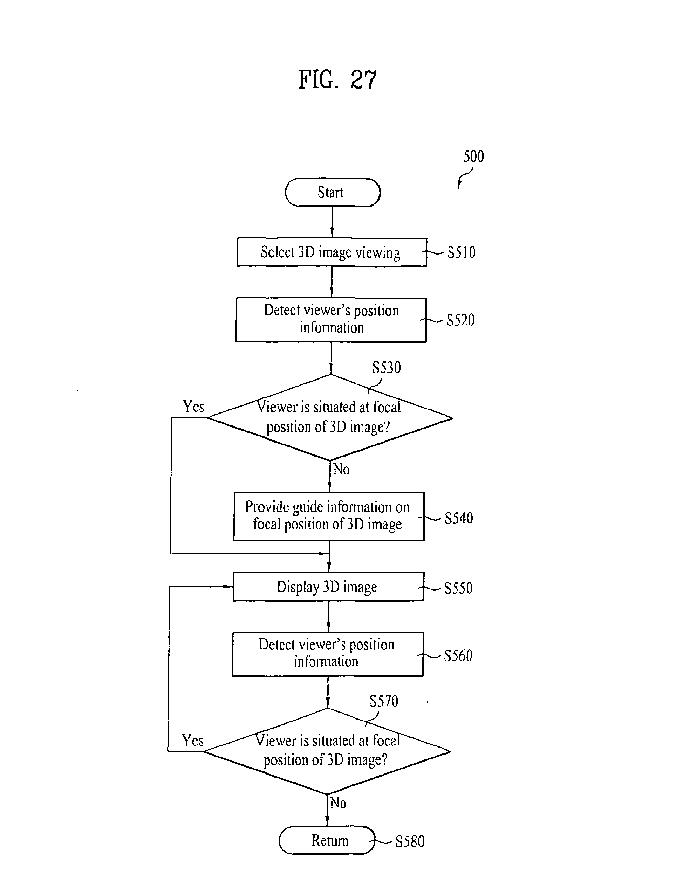

FIG. 27 is a flowchart of a first example of a method of controlling a mobile terminal according to another embodiment of the present invention.

Referring to FIG. 27, the controller 180 controls the user input unit or the display unit to enable a viewer to select whether to watch a 3D image through the user input unit [S510].

If the viewer selects to watch the 3D image, the controller 180 activates such a sensing unit as a proximity sensor, a distance sensor, a camera and the like and then detects a position information (e.g., a distance between the display and the viewer, a deflection angle, etc.) of the viewer [S520].

Subsequently, the controller 180 determines whether the viewer is situated at a focal position of the 3D image [S530].

If the controller 180 determines that the viewer is situated at the focal position of the 3D image, the controller 180 controls the 3D image to be displayed on the display unit [S550].

On the contrary, if the controller determines that the viewer is not situated at the focal position of the 3D image, the controller 180 controls the guide information providing unit 540 to provide the guide information on the focal position of the 3D image to the viewer via the guide information providing unit 150 such as the display unit, the audio output module, the illuminating unit 158, the vibrating unit 159 and the like to enable the viewer to be situated at the focal position of the 3D image. In doing so, preferably, before the guide information providing step S540, a deviation indicating step of indicating that the viewer is not situated at the focal position of the 3D image via the guide information providing unit 150 can be further included.

Preferably, the guide information providing step S540 can be executed to enable a viewer's face (or both eyes of the viewer) to be displayed on the display unit via the camera and also can be executed to enable the binocular position region 151b to be displayed on the display unit.

Afterwards, if the viewer is situated at the focal position of the 3D image in accordance with the guide information provided by the mobile terminal (i.e., the guide information providing unit), the controller 180 controls the display unit to display the 3D image [S550]. In doing so, preferably, before the 3D image displaying step, a correct position indicating step of indicting that the viewer is situated at the focal position of the 3D image via the guide information providing unit 150 can be further included.

Preferably, the controller 180 controls the mobile terminal to repeat the position information detecting step S560 and the determining step S570. Owing to this control, if the viewer does not deviate from the focal position of the 3D image, the 3D image is displayed on the display unit as it is [S550]. If the viewer deviates from the focal position of the 3D image, the guide information providing step S540 is repeated [S580].

Preferably, if the viewer deviates from the focal position of the 3D image after displaying the 3D image, if a period of time for the viewer to deviate from the focal position of the 3D image passes over a prescribed period of time, the controller 180 controls the 3D image to stop being displayed.

Therefore, the present invention enables a viewer to keep modifying its position with reference to a focal position of a 3D image, thereby continuously watching the 3D image clearly.

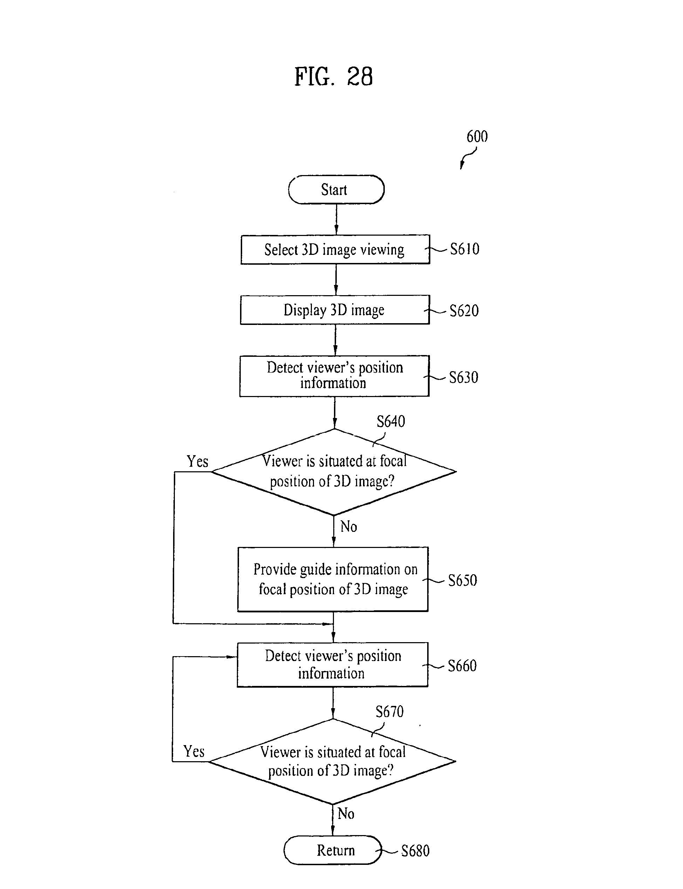

FIG. 28 is a flowchart of a second example of a method of controlling a mobile terminal according to another embodiment of the present invention.

Referring to FIG. 28, the controller 180 controls the user input unit or the display unit to enable a viewer to select whether to watch a 3D image through the user input unit [S610].

If the viewer selects to watch the 3D image, the controller 180 controls the display unit to display the 3D image [S620].

Subsequently, the controller 180 activates such a sensing unit as a proximity sensor, a distance sensor, a camera and the like and then detects a position information (e.g., a distance between the display and the viewer, a deflection angle, etc.) of the viewer [S630].

The controller 180 then determines whether the viewer is situated at a focal position of the 3D image [S640].

If the controller 180 determines that the viewer is situated at the focal position of the 3D image, the controller 180 controls the display unit to keep displaying the 3D image. On the contrary, if the controller 180 determines that the viewer is not situated at the focal position of the 3D image, the controller 180 provides a guide information for enabling the viewer to move the mobile terminal or a guide information for enabling the viewer to move via such an output unit 150 as the display unit, the audio output module, the illuminating unit 158, the vibrating unit 159 and the like to enable the viewer to be situated at the focal position of the 3D image [S650]. In doing so, preferably, before the guide information providing step S650, a deviation indicating step of indicating that the viewer is not situated at the focal position of the 3D image via the guide information providing unit 150 can be further included.

Afterwards, if the viewer is situated at the focal position of the 3D image by the guide information providing step S650, the controller 180 controls the display unit to keep displaying the 3D image.

Preferably, the controller 180 controls the mobile terminal to repeat the position information detecting step S660 and the determining step S670. Owing to this control, if the viewer does not deviate from the focal position of the 3D image, the 3D image keeps being displayed on the display unit. If the viewer deviates from the focal position of the 3D image, the guide information providing step S650 is repeated [S680].

Preferably, if the viewer deviates from the focal position of the 3D image after displaying the 3D image, if a period of time for the viewer to deviate from the focal position of the 3D image passes over a prescribed period of time, the controller 180 controls the 3D image to stop being displayed.

Therefore, the present invention enables a viewer to keep modifying its position with reference to a focal position of a 3D image, thereby continuously watching the 3D image clearly.

According to one or another embodiment of the present invention, the above-described methods can be implemented in a program recorded medium as computer-readable codes. The computer-readable media include all kinds of recording devices in which data readable by a computer system are stored. The computer-readable media include ROM, RAM, CD-ROM, magnetic tapes, floppy discs, optical data storage devices, and the like for example and also include carrier-wave type implementations (e.g., transmission via Internet).

The aforementioned embodiments are achieved by combination of structural elements and features of the present invention in a predetermined type. Each of the structural elements or features should be considered selectively unless specified separately. Each of the structural elements or features may be carried out without being combined with other structural elements or features. Also, some structural elements and/or features may be combined with one another to constitute the embodiments of the present invention.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A mobile terminal, comprising:
a display unit configured to display a three-dimensional (3D) image;
a sensing unit configured to detect a position of a viewer and to generate a position information based on the detected position, the sensing unit comprising at least a proximity sensor, a distance sensor, or a camera; and
a controller configured to:
receive the position information from the sensing unit; and
control the display unit to display the 3D image based on the received position information.

2. The mobile terminal of claim 1, wherein the controller is further configured to control the display unit to vary a focal position of the 3D image based on the received position information.

3. The mobile terminal of claim 1, wherein the display unit includes:
a video panel configured to alternately display a plurality of left eye image parts and a plurality of right eye image parts; and
a barrier layer positioned in front of the video panel, the barrier layer including an alternating plurality of light cutoff parts and light transmitting parts,
wherein the controller is further configured to control the video panel and at least a length of the light cutoff parts, a length of the light transmitting parts, or a displacement of the light cutoff parts.

4. The mobile terminal of claim 3, wherein:
the video panel comprises a plurality of pixels corresponding to the plurality of left eye image parts and a plurality of pixels corresponding to the plurality of right eye image parts;
the barrier layer comprises a plurality of subpixels;
each of the plurality of the subpixels is smaller than each of the plurality of pixels corresponding to the plurality of left eye image parts and each of the plurality of pixels corresponding to the plurality of right eye image parts.

5. The mobile terminal of claim 4, further comprising:
a memory for storing control variables,
wherein the position information is based on a distance between the display unit and the viewer, and
wherein the controller is further configured to search the control variables in the memory for a light cutoff parts length decision value corresponding to the distance between the display unit and the viewer and a light transmitting parts length decision value corresponding to the distance between the display unit and the viewer.

6. The mobile terminal of claim 4, further comprising:
a memory for storing control variables,
wherein the position information is based on a deflection degree of a binocular center of the viewer in comparison to a center of the display unit,
wherein the controller is further configured to search the control variables in the memory for a light cutoff parts displacement decision value, and
wherein the light cutoff parts displacement decision value comprises a moving extent and a moving direction of the light cutoff parts corresponding to the deflection degree of the binocular center of the viewer.

7. The mobile terminal of claim 5 or 6, wherein the controller is further configured to control an ON/OFF condition of each of a plurality of the subpixels of the barrier layer based on the light cutoff parts length decision value and the light transmitting parts length decision value or the light cutoff parts displacement decision value.

8. The mobile terminal of one of claims 1 to 7, further comprising a user input unit configured to receive a selection of an operational mode of a focal position control of the 3D image, and
wherein the operational mode comprising:
a first mode in which the light cutoff parts of the barrier layer are fixed by executing a detection of the position of the viewer and controlling the length of the light cutoff parts and the length of the light transmitting parts during a prescribed time period only once; and
a second mode in which the light cutoff parts of the barrier layer are changeable by executing the detection of the position of the viewer and controlling the length of the light cutoff parts and the length of the light transmitting parts in real time.

9. The mobile terminal of claim 1, wherein the controller is further configured to control positioning a focal position of the 3D image based on the received position information,
wherein the mobile terminal further comprises a guide information providing unit configured to provide a guide information for positioning the mobile terminal such that the focal position of the 3D image is positioned at a binocular center of the viewer, and
wherein the controller is further configured to control the guide information providing unit to provide the guide information.

10. The mobile terminal of claim 9, wherein:
the camera is configured to photograph both a left eye of the viewer and a right eye of the viewer; and
the controller is further configured to:
determine a position of the left eye of the viewer and a position of the right eye of the viewer relative to the display unit based on the photograph; and
control the guide information providing unit to provide the guide information based on the determined position of the left eye of the viewer and the position of the right eye of the viewer.

11. The mobile terminal of one of claims 9 and 10, wherein:
the guide information includes a binocular position region; and
the control unit controls the display unit to display the binocular position region.

12. The mobile terminal of claim 11, wherein the controller is further configured to control the display unit to display information indicating that the binocular center of the viewer is not positioned at the focal position of the 3D image when the binocular center of the viewer is not positioned at the focal position of the 3D image.

13. The mobile terminal of claim 11, wherein:
the controller is further configured to control the display unit to display at least an image of a character or a text information, and
at least the image of the character or the text information is configured to indicate a direction in which the mobile terminal and/or the viewer should be moved for positioning the focal position of the 3D image at the binocular center of the viewer; or
the controller is further configured to control the display unit to display at least one direction indication symbol in a predetermined region along an edge of the display unit, and
the at least one direction indication symbol is configured to indicate a direction in which the mobile terminal and/or the viewer should be moved for positioning the focal position of the 3D image at the binocular center of the viewer.

14. The mobile terminal of one of claims 9 to 13, wherein:
the guide information providing unit comprises a plurality of lights positioned at a predetermined region surrounding the display unit; and
the controller is further configured to control at least one of the plurality of the lights to illuminate in a predetermined manner to indicate at least that the binocular center of the viewer is not positioned at the focal position of the 3D image or a direction in which the mobile terminal should be moved for positioning the focal position of the 3D image at the binocular center of the viewer.

15. The mobile terminal of one of claims 9 to 14, wherein:
the guide information providing unit comprises at least a vibrating unit or an audio output module; and
the controller is further configured to control the guide information providing unit to provide information, via at least the vibrating unit or the audio output module, indicating that the binocular center of the viewer is positioned at the focal position of the 3D image.
